# EUROPEAN PATENT SPECIFICATION

(11) **EP 4 375 795 B1**
(45) Date of publication and mention of the grant of the patent: **21.10.2026**
(21) Application number: 23731929.8
(22) Date of filing: 02.06.2023
(51) Int. Cl.: G06F 1/16

(54) **ELECTRONIC DEVICE COMPRISING ELECTROMAGNETIC SENSOR**
ELEKTRONISCHE VORRICHTUNG MIT ELEKTROMAGNETISCHEM SENSOR
DISPOSITIF ÉLECTRONIQUE COMPRENANT UN CAPTEUR ÉLECTROMAGNÉTIQUE

(30) Priority: 06.10.2022 KR 20220127882; 28.11.2022 KR 20220161665
(43) Date of publication of application: 29.05.2024
(73) Proprietor: Samsung Electronics Co., Ltd., Suwon-si, Gyeonggi-do 16677 (KR)
(72) Inventor: JUN, Intae, Suwon-si, Gyeonggi-do 16677 (KR); HUR, Changwon, Suwon-si, Gyeonggi-do 16677 (KR); KIM, Jeongseob, Suwon-si, Gyeonggi-do 16677 (KR); SEO, Woojin, Suwon-si, Gyeonggi-do 16677 (KR)
(74) Representative: Gulde & Partner
(86) International application number: PCT/KR2023/007612
(87) International publication number: WO 2024/075922

(56) References cited:
- KR-A- 20200 072 190
- KR-A- 20200 126 315
- KR-A- 20210 054 767
- KR-A- 20220 079 104
- US-A1- 2017 131 118

## Description

### [Technical Field]

Embodiment(s) of the disclosure relate to electronic devices, including, e.g., electromagnetic sensors and/or electromagnetic members.

### [Background Art]

The term "electronic device" may mean a device performing a particular function according to its equipped program, such as a home appliance, an electronic scheduler, a portable multimedia player, a mobile communication terminal, a tablet PC, a video/sound device, a desktop PC or laptop computer, a navigation for automobile, etc. For example, the electronic devices may output stored information as voices or images. As electronic devices are highly integrated, and high-speed, high-volume wireless communication becomes commonplace, an electronic device, such as a mobile communication terminal, is recently being equipped with various functions. For example, an electronic device comes with the integrated functionality, including an entertainment function, such as playing video games, a multimedia function, such as replaying music/videos, a communication and security function for mobile banking, or a scheduling or e-wallet function.

As smartphones or other personal/portable communication devices spread, users' demand for portability and use convenience is on the rise. For example, a touchscreen display may not only serve as an output device of visual information but also provide a virtual keyboard that replaces a mechanical input device (e.g., a button input device). As such, portable communication devices or electronic devices may be made compact while delivering further enhanced applicability (e.g., a larger screen). Flexible displays, e.g., foldable or rollable displays, will come in commerce and electronic devices are expected to deliver better portability and use convenience. An electronic device including a flexible display may be carried in a folded or rolled state of a plurality of different structures (e.g., housings), and may provide a large screen in an unfolded state, thereby enhancing portability and ease of use. In similar regards, publication KR20200072190A relates to an electronic device with a foldable housing, where the antenna is designed to maintain radiation performance by selectively using conductive parts of the housing or hinge structure as the antenna, and publication US2017131118A1 relates to a foldable electronic device that calculates the angle of fold between two portions by using a magnetic sensor and a non-extensible element with a magnetic component.

The above-described information may be provided as background for the purpose of helping understanding of the disclosure. No claim or determination is made as to whether any of the foregoing is applicable as prior art in relation to the disclosure.

### [Disclosure of Invention]

### [Solution to Problems]

According to an embodiment of the disclosure, an electronic device is provided corresponding to the appended claims. The electronic device comprises a housing including a first housing and a second housing configured to rotate relative to the first housing about a folding axis, an electromagnetic member disposed in either the first housing or the second housing and configured to generate an electromagnetic field, an electromagnetic sensor disposed in the other of the first housing and the second housing and configured to detect the electromagnetic field, and a hinge structure disposed inside the housing to provide the folding axis and rotatably coupling the first housing and the second housing. In an embodiment, the hinge structure includes a first hinge plate disposed in the first housing and including a first portion configured to transmit the electromagnetic field and a second hinge plate disposed in the second housing, rotatably coupled to the first hinge plate, and including a second portion configured to transmit the electromagnetic field. In an embodiment, the first portion is disposed between the folding axis and the electromagnetic sensor, and the second portion is disposed between the folding axis and the electromagnetic member.

According to an aspect, an electronic device may comprise a first housing, a second housing configured to rotate between a first position where the second housing faces the first housing and a second position unfolded from the first position by a designated angle about a folding axis, an electromagnetic member disposed in either the first housing or the second housing and configured to generate an electromagnetic field, an electromagnetic sensor disposed in the other of the first housing and the second housing and configured to detect the electromagnetic field, a hinge structure disposed inside the housing to provide the folding axis and rotatably coupling the first housing and the second housing, and a processor configured to determine a state of being at the first position or calculate an unfolded angle of the second housing with respect to the first housing, based on the electromagnetic field detected by the electromagnetic sensor. The hinge structure may include a first hinge plate disposed in the first housing and including a first portion configured to transmit the electromagnetic field and a second hinge plate disposed in the second housing, rotatably coupled to the first hinge plate, and including a second portion configured to transmit the electromagnetic field. The first portion may be disposed between the folding axis and the electromagnetic sensor, and the second portion may be disposed between the folding axis and the electromagnetic member. At the second position, the first portion and the second portion may be disposed between the electromagnetic sensor and the electromagnetic member.

### [Brief Description of Drawings]

The foregoing and other aspects, configurations, and/or advantages of an embodiment of the disclosure will be more apparent from the following detailed description taken in conjunction with the accompanying drawings.
FIG. 1 is a block diagram illustrating an electronic device in a network environment according to an embodiment of the disclosure;
FIG. 2 is a view illustrating an unfolded state of an electronic device according to an embodiment of the disclosure;
FIG. 3 is a view illustrating a folded state of an electronic device according to an embodiment of the disclosure;
FIG. 4 is an exploded perspective view illustrating an electronic device according to an embodiment of the disclosure;
FIG. 5 is a rear view illustrating an internal configuration of an electronic device according to an embodiment of the disclosure;
FIG. 6 is an enlarged view illustrating a portion 'E' of the electronic device of FIG. 5 according to an embodiment of the disclosure;
FIG. 7 is an enlarged view illustrating a portion of an electronic device according to an embodiment of the disclosure;
FIG. 8 is an enlarged view illustrating a portion of an electronic device according to an embodiment of the disclosure;
FIG. 9 is a block diagram illustrating an electronic device according to an embodiment of the disclosure;
FIG. 10 is a flowchart illustrating an operation of detecting a folding opening/closing angle using an electromagnetic field in an electronic device according to an embodiment;
FIG. 11 is a view illustrating an operation of detecting a folding opening/closing angle using an electromagnetic field in an electronic device according to an embodiment;
FIG. 12 is a flowchart illustrating an operation of detecting a folding opening/closing angle using an electromagnetic field in an electronic device according to an embodiment; and
FIGS. 13A, 13B, 13C, and 13D are graphs illustrating changes in density of electromagnetic field measured from an electromagnetic member in an electronic device according to an embodiment.

Throughout the drawings, like reference numerals may be assigned to like parts, components, and/or structures.

### [Mode for the Invention]

In an electronic device including a flexible display, a visually exposed area of the screen display area may be extended or contracted, and/or a partial area of the screen display area may be disposed to output a screen in a direction different from that of the remaining area. For example, in a foldable electronic device, a partial area of the display may be inclined relative to the remaining area. In an embodiment, the foldable electronic device may provide various user experiences by adjusting the user interface output on the screen according to the exposed area or partial orientation of the screen display area. In detecting the exposed area of the screen display area or partial orientation of the screen display area, the electronic device may include various types of sensors. However, it may be difficult to secure a space for placing an additional sensor inside a downsized/lightweight electronic device, and placement of an additional sensor may lead to an increase in the manufacturing cost of the electronic device.

An embodiment of the disclosure aims to address the foregoing issues and/or drawbacks and provide advantages described below, providing an electronic device including an electromagnetic sensor and/or electromagnetic member easily to place in a narrow space.

An embodiment of the disclosure may provide an electronic device capable of detecting a partial orientation of a screen display area while suppressing an increase in manufacturing cost.

An embodiment of the disclosure may provide an electronic device implementing various user experiences by detecting a partial orientation of a screen display area.

An embodiment of the disclosure may provide an electronic device capable of reducing an electromagnetic field generated from an electromagnetic member to a noise level or preventing an increase in power consumption by adjusting a current supplied from the electromagnetic member.

Objects of the disclosure are not limited to the foregoing, and other unmentioned objects would be apparent to one of ordinary skill in the art from the following description.

The following description taken in conjunction with the accompanying drawings may provide an understanding of various exemplary implementations of the disclosure, including claims. The specific embodiments disclosed in the following description entail various specific details to aid understanding, but are regarded as one of various embodiments. Accordingly, it will be understood by those skilled in the art that various changes and modifications may be made to the various implementations described in the disclosure within the scope of the appended claims. Further, descriptions of well-known functions and configurations may be omitted for clarity and brevity.

The terms and words used in the following description and claims are not limited to the bibliographical meaning, but may be used to clearly and consistently describe an embodiment of the disclosure. Therefore, it will be apparent to those skilled in the art that the following description of various implementations of the disclosure is provided only for the purpose of description, not for the purpose of limiting the disclosure defined as the scope of the claims.

The singular forms "a," "an," and "the" are intended to include the plural forms as well, unless the context clearly indicates otherwise. Thus, as an example, "a component surface" may be interpreted as including one or more of the surfaces of a component.

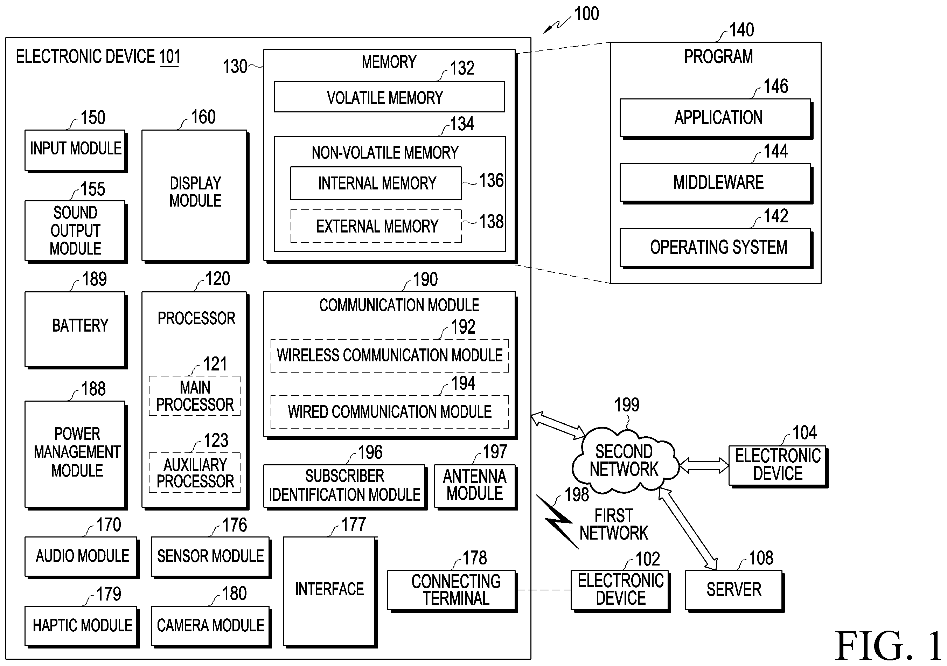

FIG. 1 is a block diagram illustrating an electronic device 101 in a network environment 100 according to an embodiment of the disclosure. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a **HDMI** connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to embodiment(s) of the disclosure may be one of various types of electronic devices. The electronic devices may include, for example, a portable communication device (e.g., a smartphone), a computer device, a portable multimedia device, a portable medical device, a camera, a wearable device, or a home appliance. The electronic devices according to an embodiment are not limited to those described above.

It should be appreciated that an embodiment of the disclosure and the terms used therein are not intended to limit the technological features set forth herein to particular embodiments and include various changes, equivalents, or replacements for a corresponding embodiment, without departing from the scope of the appended claims. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiment(s) of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or Further, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

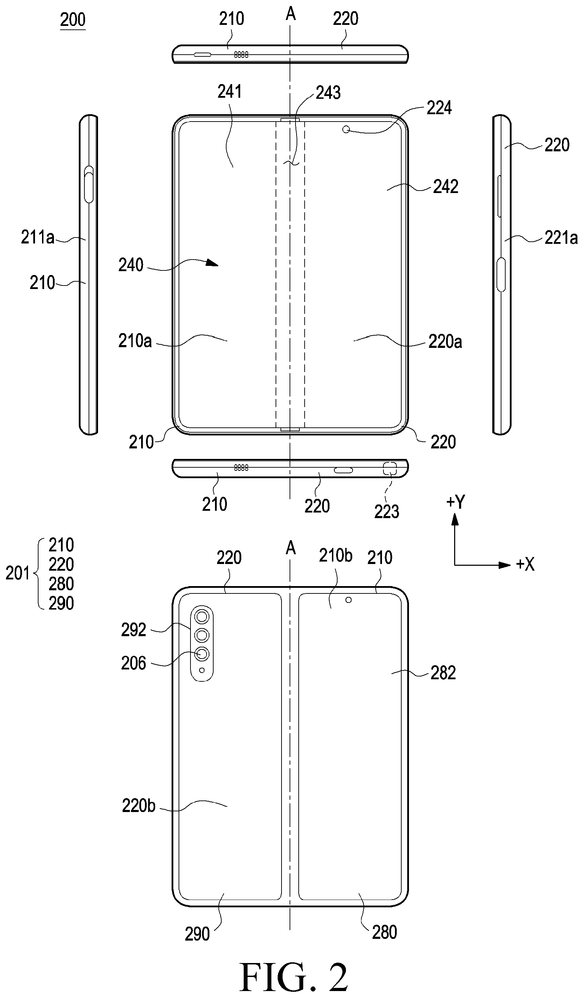

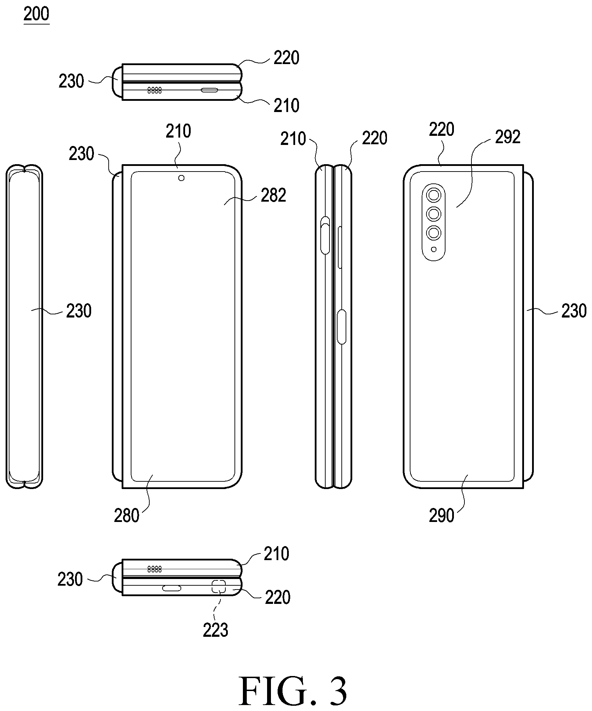

FIG. 2 is a view illustrating an unfolded state of an electronic device 200 according to an embodiment of the disclosure. FIG. 3 is a view illustrating a folded state of an electronic device 200 according to an embodiment of the disclosure.

Referring to FIGS. 2 and 3, in an embodiment, an electronic device 200 (e.g., the electronic device 101, 102, or 104 of FIG. 1) may include a housing 201, a hinge cover 230 covering a foldable portion of the housing 201, and a flexible or foldable display 240 (hereinafter, simply "display 240") disposed in a space formed by the housing 201. According to an embodiment, the surface on which the display 240 is disposed is defined as a front surface (e.g., a first front surface 210a and a second front surface 220a) of the electronic device 200. A surface opposite to the front surface is defined as a rear surface (e.g., the first rear surface 210b and the second rear surface 220b) of the electronic device 200. A surface surrounding the space between the front and rear surfaces is defined as a side surface (e.g., a first side surface 211a and a second side surface 221a) of the electronic device 200.

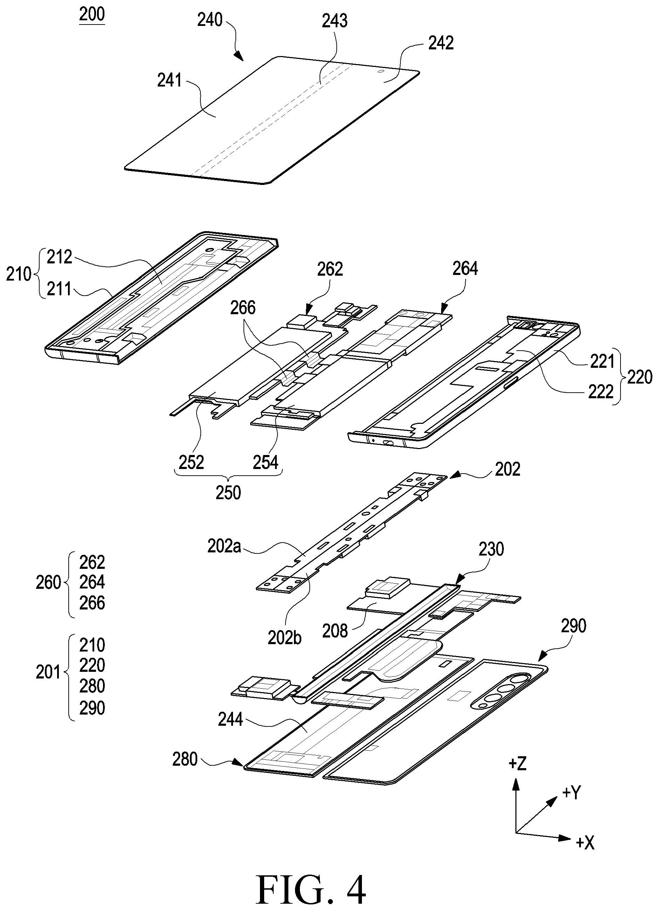

According to an embodiment, the housing 201 may include a first housing 210, a second housing 220 rotatably or pivotably coupled to the first housing 210, a first rear cover 280, a second rear cover 290, and a hinge module (e.g., the hinge module 202 of FIG. 4). The hinge module 202 (or "hinge structure") may provide at least one folding axis A serving as a rotation center of the first housing 210 and/or the second housing 220. The housing 201 of the electronic device 200 are not limited to the shape and coupling shown in FIGS. 2 and 3 but may rather be implemented in other shapes or via a combination and/or coupling of other components. For example, in another embodiment, the first housing 210 and the first rear cover 280 may be integrally formed with each other, and the second housing 220 and the second rear cover 290 may be integrally formed with each other. According to an embodiment, the first housing 210 may be connected to a hinge module (e.g., the hinge module 202 of FIG. 4) and may include a first front surface 210a facing in a first direction and a first rear surface 210b facing in a second direction opposite to the first direction. The second housing 220 may be connected to the hinge module 202 and may include a second front surface 220a facing in a third direction and a second rear surface 220b facing in a fourth direction opposite to the third direction, and may rotate from the first housing 210 about the hinge module 202. Thus, the electronic device 200 may turn into a folded state or unfolded state. In the folded state of the electronic device 200, the first front surface 210a may face the second front surface 220a and, in the unfolded state, the third direction may be substantially parallel to the first direction. Hereinafter, unless otherwise mentioned, directions are described based on the unfolded state of the electronic device 200. In an embodiment, the 'first position' or 'folded state' may refer to a state in which the first housing 210 and the second housing 220 are disposed to substantially face each other, and the 'second position' or 'unfolded state' may refer to a state in which the second housing 220 is rotated from the first position to form a designated angle from the first housing 210. **In** the disclosed embodiment, the second housing 220 may be rotated by 180 degrees from the first position to be disposed parallel to one side of the first housing 210. Further, the first housing 210 and the second housing 220 do not need to have the same dimensions, i.e. the first housing 210 may at least partially overlap the second housing 220 or vice versa.

According to an embodiment, the first housing 210 and the second housing 220 are disposed on both sides of the folding axis A and to be overall symmetrical in shape with respect to the folding axis A. As set forth below, the first housing 210 and the second housing 220 may have different angles or distances formed therebetween depending on whether the electronic device 200 is in the unfolded, folded, or intermediate state. According to an embodiment, the second housing 220 further includes the sensor area 224 where various sensors (e.g., a front camera) are disposed, unlike the first housing 210 but, in the remaining area, the second housing 220 may be symmetrical in shape with the first housing 210. According to an embodiment, there may be provided a plurality of (e.g., two) folding axes A parallel to each other. In the disclosure, the folding axis A is provided along the length direction (Y-axis direction) of the electronic device 200, but the direction of the folding axis A is not limited thereto. For example, according to external design or the user's usage habit, the electronic device 200 may be understood as including a folding axis A extending along the width direction (e.g., X-axis direction).

According to an embodiment, the electronic device 200 may include a structure into which a digital pen may be inserted. For example, a hole 223 into which the digital pen may be inserted may be formed in a side surface of the first housing 210 or a side surface of the second housing 220 of the electronic device 200.

According to an embodiment, the first housing 210 and the second housing 220 may at least partially be formed of a metal or non-metallic material with a rigidity selected to support the display 240. At least a portion formed of metal may provide a ground plane of the electronic device 200 and may be electrically connected with a ground conductor provided on a printed circuit board (e.g., the board unit 260 of FIG. 4).

According to an embodiment, the sensor area 224 may be formed to have a predetermined area, adjacent to a corner of the second housing 220. However, the placement, shape, or size of the sensor area 224 is not limited to those illustrated. For example, in another embodiment, the sensor area 224 may be provided in a different corner of the second housing 220 or in any area between the top corner and the bottom corner or in the first housing 210. According to an embodiment, components for performing various functions, embedded in the electronic device 200, may be visually exposed through the sensor area 224 or one or more openings in the sensor area 224 to the front surface of the electronic device 200. **In** an embodiment, the components may include various kinds of sensors. The sensor may include, e.g., at least one of a front camera, a receiver, or a proximity sensor.

According to an embodiment, the first rear cover 280 may be disposed on one side of the folding axis A on the rear surface of the electronic device 200 and have, e.g., a substantially rectangular periphery which may be surrounded by the first housing 210. Similarly, the second rear cover 290 may be disposed on the opposite side of the folding axis A on the rear surface of the electronic device 200 and its periphery may be surrounded by the second housing 220.

According to an embodiment, the first rear cover 280 and the second rear cover 290 may be substantially symmetrical in shape with respect to the folding axis A. However, the first rear cover 280 and the second rear cover 290 are not necessarily symmetrical in shape. In an embodiment, the electronic device 200 may include the first rear cover 280 and the second rear cover 290 having different shapes (e.g., asymmetrical shapes).

According to an embodiment, the first rear cover 280, the second rear cover 290, the first housing 210, and the second housing 220 may form a space where various components (e.g., a printed circuit board or battery) of the electronic device 200 may be disposed. According to an embodiment, one or more components may be arranged or visually exposed on/through the rear surface of the electronic device 200. For example, at least a portion of a sub display (e.g., the sub display 244 of FIG. 4) may be visually exposed through a first back surface area 282 of the first back cover 280. In an embodiment, one or more components or sensors may be visually exposed through a second rear surface area 292 of the second rear cover 290. In an embodiment, the sensor may include a proximity sensor and/or a camera module 206 (e.g., a rear camera).

In an embodiment, a front camera visually exposed to the front surface of the electronic device 200 through one or more openings prepared in the sensor area 224 or a camera module 206 visually exposed through a second rear surface area 292 of the second rear cover 290 may include one or more lenses, an image sensor, and/or an image signal processor. In an embodiment, two or more lenses (an infrared (IR) camera, a wide-angle lens, and a telescopic lens) and image sensors may be disposed on one surface of the electronic device 200.

Referring to FIG. 3 (or FIG. 4 described below), the hinge cover 230 may be disposed between the first housing 210 and the second housing 220 to hide the internal components (e.g., the hinge module 202 of FIG. 4). According to an embodiment, the hinge cover 230 may be hidden by a portion of the first housing 210 and second housing 220 or be exposed to the outside depending on the state (the unfolded state (e.g., flat state) or folded state) of the electronic device 200. For example, in the unfolded state (e.g., the state of the second position), the hinge cover 230 may be substantially covered by the first housing 210 and the second housing 220, and in the folded state (e.g., the state of the first position), most of the outer surface of the hinge cover 230 may be exposed to the outside.

According to an embodiment, as shown in FIG. 2, in the unfolded state of the electronic device 200, the hinge cover 230 may be hidden, and thus not exposed, by the first housing 210 and the second housing 220. However, the hinge cover 230 may also be partially visible in the unfolded state. As another example, as shown in FIG. 3, in the folded state (e.g., a fully folded state) of the electronic device 200, the hinge cover 230 may be exposed to the outside between the first housing 210 and the second housing 220. As another example, in an intermediate state in which the first housing 210 and the second housing 220 are folded with a certain angle, the hinge cover 230 may be partially exposed to the outside between the first housing 210 and the second housing 220. However, in this case, the exposed area may be smaller than that in the completely folded state. In an embodiment, the hinge cover 230 may include a curved surface but the present invention is not limited thereto.

According to an embodiment, the display 240 may be disposed in a space formed by the housing 201. For example, the display 240 may be seated on a recess formed by the housing 201 and may occupy most of the front surface of the electronic device 200. Thus, the front surface of the electronic device 200 may include the display 240 and a partial area of the first housing 210 and a partial area of the second housing 220, which are adjacent to the display 240. The rear surface of the electronic device 200 may include a first rear cover 280, a partial area of the first housing 210 adjacent to the first rear cover 280, a second rear cover 290, and a partial area of the second housing 220 adjacent to the second rear cover 290.

According to an embodiment, the display 240 may mean a display at least a portion of which may be transformed into a flat or curved surface. According to an embodiment, the display 240 may include a folding area 243, a first display area 241 disposed on one side of the folding area 243 (e.g., the left side of the folding area 243 of FIG. 2), and a second display area 242 disposed on the opposite side of the folding area 243 (e.g., the right side of the folding area 203 of FIG. 2).

However, the segmentation of the display 240 is merely an example, and the display 240 may be divided into a plurality of (e.g., four or more, or two) areas depending on the structure or function of the display 200. For example, in the embodiment illustrated in FIG. 2, the display 240 may be divided into the areas by the folding area 243 or folding axis (axis A) extending in parallel with the Y axis but, in another embodiment, the display 240 may be divided into the areas with respect to another folding area (e.g., a folding area parallel with the X axis) or another folding axis (e.g., a folding axis parallel with the X axis). According to an embodiment, the display 240 may be coupled with or disposed adjacent to a touch detection circuit, a pressure sensor capable of measuring the strength (pressure) of touches, and/or a digitizer (not shown) for detecting a magnetic field-type stylus pen.

According to an embodiment, the first display area 241 and the second display area 242 may be overall symmetrical in shape with respect to the folding area 243. According to an embodiment (not shown), unlike the first display area 241, the second display area 242 may include a notch depending on the presence of the sensor area 224, but the rest may be symmetrical in shape with the first display area 241. In other words, the first display area 241 and the second display area 242 may include symmetrical portions and asymmetrical portions.

Described below are the operation of the first housing 210 and the second housing 220 and each area of the display 240 depending on the state (e.g., the unfolded state (or flat state) and folded state) of the electronic device 200.

According to an embodiment, when the electronic device 200 is in the unfolded state (flat state) (e.g., FIG. 2), the first display area 241 and the second display area 242 may be disposed to face in the substantially same direction while the first housing 210 and the second housing 220 are angled substantially at 180 degrees therebetween. For example, in the unfolded state, the surface of the first display area 241 and the surface of the second display area 242 may be angled at 180 degrees therebetween while facing in the same direction (e.g., an oriented direction of the front surface of the electronic device). In an embodiment, in the unfolded state, an edge of the first housing 210 may be arranged adjacent to an edge of the second housing 220. The folding area 243 may form the substantially same plane with the first display area 241 and the second display area 242.

According to an embodiment, when the electronic device 200 is in the folded state (e.g., FIG. 3), the first housing 210 and the second housing 220 may be disposed to face each other. The surface of the first display area 241 and the surface of the second display area 242 of the display 240 may be angled at a small angle (e.g., an angle between 0 degrees and 10 degrees) therefrom while substantially facing each other. Angles between 0 degrees and 15 degrees or between 0 degrees and 20 degrees may also be referred to as a small angle, but the present invention is not limited thereto. At least a portion of the folding area 243 may be formed as a curved surface having a predetermined curvature. **In an** embodiment, although not shown, when the electronic device is in a folded state, the surface of the first rear cover 280 and the surface of the second rear cover 290 may substantially face each other while forming a narrow angle therebetween. In an electronic device that is folded so that the surface of the first rear cover 280 and the surface of the second rear cover 290 face each other, in a folded state, the first display area 241 may be visually exposed to the outside of the electronic device in a direction opposite to the second display area 242, and the folding area 243 may be visually exposed to the outside of the electronic device in a state of forming a curved surface having a predetermined curvature. For example, the portion visually exposed to the outside in the folded state may vary depending on the structure of the electronic device 200, and it should be noted that the embodiment(s) of the disclosure are not limited to the structure shown in the drawings.

According to an embodiment, when the electronic device 200 is in the intermediate state, the first housing 210 and the second housing 220 may be disposed at a certain angle therebetween. The surface of the first display area 241 of the display 240 and the surface of the second display area 242 may form an angle which is larger than the angle in the folded state and smaller than the angle in the unfolded state. The folding area 243 may at least partially have a curved surface with a predetermined curvature and, in this case, the curvature may be smaller than that when it is in the folded state.

FIG. 4 is an exploded perspective view illustrating an electronic device 200 according to an embodiment.

Referring to FIG. 4, an electronic device 200 may include a housing 201, a display 240, a hinge module 202, a battery 250, and a board unit 260. The housing 201 may include a first housing 210, a second housing 220, a first rear cover 280, and a second rear cover 290.

According to an embodiment, the housing 201 may include a first housing 210, a second housing 220, a hinge cover 230, a first rear cover 280, and a second rear cover 290. The configuration of the first housing 210, the second housing 220, the hinge cover 230, the first rear cover 280, and the second rear cover 290 of FIG. 4 may be identical in whole or part to the configuration of the first housing 210, the second housing 220, the hinge cover 230, the first rear cover 280, and the second rear cover 290 of FIG. 2 and/or FIG. 3. In an embodiment, the hinge module 202 may be disposed inside the housing 201 to rotatably connect the first housing 210 and the second housing 220.

According to an embodiment, the first housing 210 and the second housing 220 may be assembled together to be coupled to two opposite sides of the hinge module 202. According to an embodiment, the first housing 210 may include a first supporting area 212 (e.g., a first supporting plate or a first supporting member) that may support the components (e.g., the first circuit board 262 and/or the first battery 252) of the electronic device 200 and a first sidewall 211 surrounding at least a portion of the first supporting area 212. The first sidewall 211 may include a first side surface (e.g., the first side surface 211a of FIG. 2) of the electronic device 200. According to an embodiment, the second housing 220 may include a second supporting area 222 (e.g., a second supporting plate or a second supporting member) that may support the components (e.g., the second circuit board 264 and/or the second battery 254) of the electronic device 200 and a second sidewall 221 surrounding at least a portion of the second supporting area 222. The second sidewall 221 may include a second side surface (e.g., the second side surface 221a of FIG. 2) of the electronic device 200.

According to an embodiment, the display 240 may include a first display area 241, a second display area 242, a folding area 243, and a sub display 244. The configuration of the first display area 241, the second display area 242, and the folding area 243 of FIG. 4 may be identical in whole or part to the configuration of the first display area 241, the second display area 242, and the folding area 243 of FIG. 2.

According to an embodiment, the sub display 244 may display screen in a different direction from the display areas 241 and 242. For example, the sub display 244 may output screen in a direction opposite to the first display area 241. According to an embodiment, the sub display 244 may be disposed on the first rear cover 280.

According to an embodiment, the battery 250 may include a first battery 252 disposed in the first housing 210 and a second battery 254 disposed in the second housing 220. According to an embodiment, the first battery 252 may be disposed on the first circuit board 262, and the second battery 254 may be disposed on the second circuit board 264. In an embodiment, the first circuit board 262 may be disposed on the same plane as at least a portion of the first battery 252, and the second circuit board 264 may be disposed on the same plane as at least a portion of the second battery 254.

According to an embodiment, the board unit 260 may include a first circuit board 262 disposed in the first housing 210 and a second circuit board 264 disposed in the second housing 220. According to an embodiment, the board unit 260 may include at least one flexible printed circuit board 266 for electrically connecting the first circuit board 262 and the second circuit board 264 to each other. According to an embodiment, at least a portion of the flexible printed circuit board 266 may be disposed across the hinge module 202. According to an embodiment, the first circuit board 262 and the second circuit board 264 may be disposed in a space formed by the first housing 210, the second housing 220, the first rear cover 280, and the second rear cover 290. Components for implementing various functions of the electronic device 200 may be disposed on the first circuit board 262 and the second circuit board 264.

According to an embodiment, the electronic device 200 may include a speaker module 208. According to an embodiment, the speaker module 208 may convert an electrical signal into sound. According to an embodiment, the speaker module 208 may be disposed in a space formed by the first housing 210, the second housing 220, the first rear cover 280, and the second rear cover 290.

In the following detailed description, a configuration in which the first housing 210 and the second housing 220 are connected or coupled to be rotatable by a hinge module (or referred to as a 'hinge structure') may be described as an example. However, it should be noted that the embodiment does not limit the electronic device according to the embodiment(s) of the disclosure. For example, the electronic device according to embodiment(s) of the disclosure may include three or more housings. In the embodiment disclosed below, a "pair of housings" may refer to two rotatably-coupled housings among three or more housings.

The electronic device 200 disclosed in FIGS. 2 to 4 has the appearance of a foldable electronic device, but the present invention is not limited thereto. For example, the electronic device shown may be a bar-type, plate-type or rollable electronic device. "Rollable electronic device" may mean an electronic device at least a portion of which may be wound or rolled or received in a housing (e.g., the housing 201 of FIG. 2) as the display (e.g., the display 240 of FIG. 4) may be bent and deformed. As the display is stretched out or is exposed to the outside in a larger area according to the user's need, the rollable electronic device may use an expanded second display area.

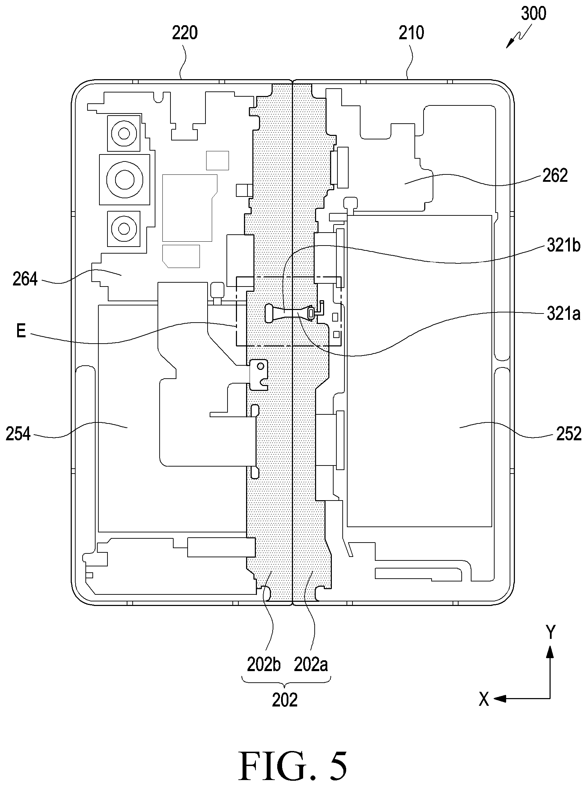

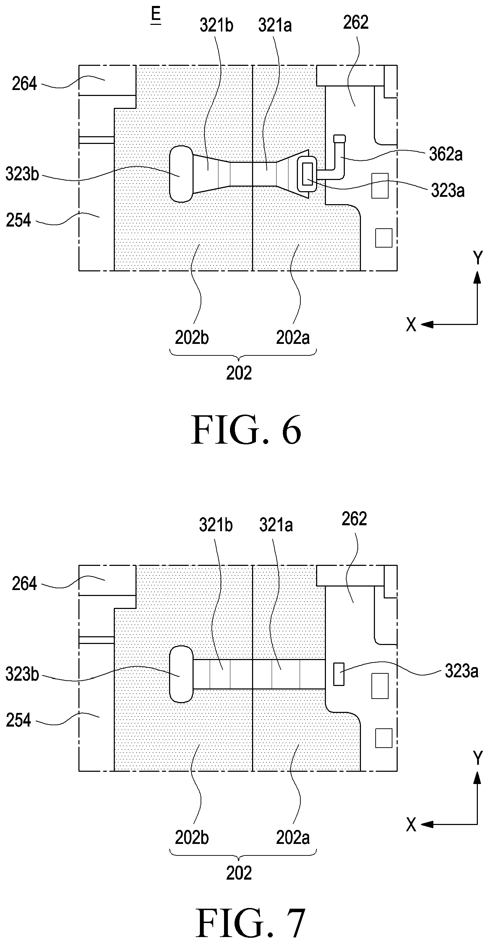

FIG. 5 is a rear view illustrating an internal configuration of an electronic device 300 according to an embodiment of the disclosure. FIG. 6 is an enlarged view illustrating a portion 'E' of the electronic device 300 of FIG. 5 according to an embodiment of the disclosure.

The electronic device 300 of FIGS. 5 and 6 may be at least partially identical to the electronic devices 101, and 200 of FIGS. 1 to 4. **In** an embodiment, the electronic device 300 of FIGS. 5 and 6 may be substantially the same as the electronic devices 101, and 200 of FIGS. 1 to 4. **In** describing the electronic device 300 of FIGS. 5 and 6, the components which may easily be appreciated through the previous embodiments are denoted with or without the same reference numerals and their detailed description may be skipped. For example, the components of the electronic device 101, or 200 of FIGS. 1 to 4 may be applied for the component(s) omitted from the description of the electronic device 300 of FIGS. 5 and 6.

Referring to FIGS. 5 and 6, an electronic device 300 may include a first housing 210 and a second housing 220 rotatably coupled to each other by a hinge module 202, and an electromagnetic sensor 323a and an electromagnetic member 323b disposed in corresponding one of the first housing 210 and the second housing 220, respectively. For example, when the electromagnetic sensor 323a is disposed in the first housing 210, the electromagnetic member 323b may be disposed in the second housing 220. Similarly, when the electromagnetic sensor 323a is disposed in the second housing 220, the electromagnetic member 323b may be disposed in the second housing 210. In an embodiment, the electromagnetic member 323b may generate an electromagnetic field, and the electromagnetic sensor 323a may detect the electromagnetic field generated by the electromagnetic member 323b. For example, when the first housing 210 and the second housing 220 rotate relative to each other, the electromagnetic sensor 323a may detect an electromagnetic field (e.g., a change in magnetic flux density). In an embodiment, the electronic device 300 (e.g., the processor 120 of FIG. 1) may determine or calculate the folded state of the second housing 220 with respect to the first housing 210 or the inclination angle of the second housing 220 with respect to the first housing 210, based on the change in the magnetic flux density (or the currently detected magnetic flux density) detected through the electromagnetic sensor 323a.

According to an embodiment, the hinge module 202 may include a first hinge plate 202a and a second hinge plate 202b rotatably coupled to each other. For example, the first hinge plate 202a and the second hinge plate 202b may be disposed on the hinge cover (e.g., the hinge cover 230 of FIG. 4) to provide a folding axis (e.g., the folding axis A of FIG. 2). In an embodiment, the first hinge plate 202a may be disposed at one edge of the first housing 210, and the second hinge plate 202b may be disposed at one edge of the second housing 220. For example, the first hinge plate 202a may be substantially mounted or fixed inside the first housing 210, and the second hinge plate 202b may be substantially mounted or fixed inside the second housing 220. Accordingly, the hinge module 202 may rotatably connect the first housing 210 and the second housing 220.

According to an embodiment, the first circuit board 262 may be at least partially arranged with the first battery 252 along the Y-axis direction. In an embodiment, a portion of the first circuit board 262 may be disposed in an area between the first battery 252 and the folding axis A. In an embodiment, the second circuit board 264 may be at least partially arranged with the second battery 254 along the Y-axis direction. In an embodiment, a portion of the second circuit board 264 may be disposed in an area between the second battery 254 and the folding axis A. For example, the portion of the first circuit board 262 and the portion of the second circuit board 264 may be disposed adjacent to each other with the folding axis A interposed therebetween.

According to an embodiment, the electromagnetic sensor 323a may include a three-dimensional (3D) hall sensor that detects a magnetic flux density or a change in the magnetic flux density in the 3-axis directions (e.g., the X axis, Y axis, and Z axis of FIG. 4). For example, when the first housing 210 and the second housing 220 are unfolded or folded, the electromagnetic sensor 323a may detect the position or movement of the electromagnetic member 323b. In an embodiment, the electronic device 300 or the processor 120 may calculate or determine the position of the second housing 220 relative to the first housing 210, based on information detected through the electromagnetic sensor 323a. In an embodiment, the electromagnetic sensor 323a may be disposed adjacent to the folding axis A. For example, in the state illustrated in FIGS. 5 and 6, the electromagnetic sensor 323a may be disposed on the first hinge plate 202a substantially within the first housing 210.

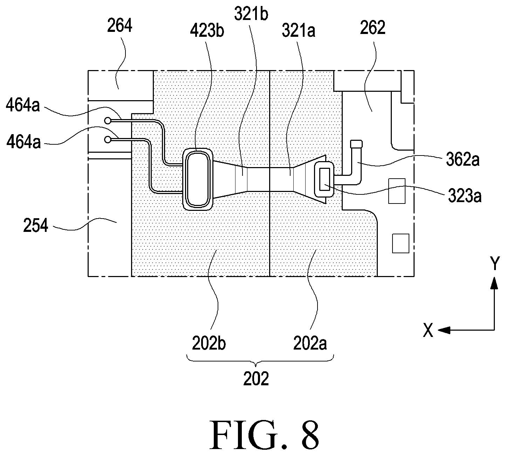

According to an embodiment, the electromagnetic member 323b may include a permanent magnet (or a coil of FIG. 8). In an embodiment, when the first housing 210 and the second housing 220 are unfolded or folded, the electromagnetic member 323b may move with respect to the electromagnetic sensor 323a. Using a permanent magnet has the advantage that it is less susceptible to faults. On the contrary, using a coil allows to generate different electromagnetic fields, i.e. based on different current being applied to the coil. The electromagnetic field detected by the electromagnetic sensor 323a may be changed according to the movement of the electromagnetic member 323b, and the electromagnetic sensor 323a may generate information about the movement of the electromagnetic member 323b or the relative movement of the first housing 210 and the second housing 220 by detecting such a change in the electromagnetic field (or the current magnetic flux density). In an embodiment, the electromagnetic member 323b may be disposed adjacent to the folding axis A. For example, in the state illustrated in FIGS. 5 and 6, the electromagnetic member 323b may be disposed on the second hinge plate 202b substantially within the second housing 220.

According to an embodiment, the intensity of the magnetic flux density may be inversely proportional to the square of the distance from the electromagnetic member 323b. For example, as the distance between the electromagnetic member 323b and the electromagnetic sensor 323a increases, the electromagnetic member 323b may be manufactured with a specification for generating a larger electromagnetic force, or when the electromagnetic sensor 323a having a higher sensitivity is disposed, a change in magnetic flux density or magnetic flux density may be accurately detected. **In** an embodiment, in securing a stable operating environment of an electronic component (e.g., a component on which the processor 120 or the communication module 190 of FIG. 1 is mounted) disposed nearby, it may be difficult to dispose the electromagnetic member 323b that generates a large electromagnetic force. **In** the embodiment(s) of the disclosure, since the electromagnetic member 323b and the electromagnetic sensor 323a are disposed adjacent to the folding axis A, good accuracy may be secured in detecting a change in magnetic flux density regardless of the electromagnetic force of the electromagnetic member 323b or the specification of the electromagnetic sensor 323a. For example, the electronic device 300 according to an embodiment(s) of the disclosure may provide a stable operating environment of the electronic component disposed around the electromagnetic member 323b while detecting the position of the second housing 220 relative to the first housing 210.

According to an embodiment, the first hinge plate 202a and/or the second hinge plate 202b may include a portion(s) that transmit an electromagnetic field. For example, when at least the first housing 210 and the second housing 220 are in the unfolded state, a portion(s) for transmitting an electromagnetic field may be disposed between the electromagnetic sensor 323a and the electromagnetic member 323b. For example, the first portion 321a that transmits an electromagnetic field while being a portion of the first hinge plate 202a may be formed of an engineering plastic material such as polybutylene terephthalate (PBT), and may be disposed between the electromagnetic sensor 323a and the folding axis A. **In** an embodiment, the second portion 321b, which is a portion of the second hinge plate 202b and transmits an electromagnetic field, may be formed of an engineering plastic material such as PBT, and may be disposed between the electromagnetic member 323b and the folding axis A.

According to an embodiment, the first portion 321a may concentrate the electromagnetic field generated by the electromagnetic member 323b to the first portion 321a by using a ferromagnetic material having a higher relative magnetic permeability (e.g., having a relative magnetic permeability of about 10 or more) than other portions of the first hinge plate 202a. Examples of ferromagnetic materials include, but are not limited to, materials such as iron, mu metal, ferrite, permalloy, carbon steel, and/or nickel. The first portion 321a may be manufactured to be attached to the surface of the first housing 210 (or the first hinge plate 202a) in the form of a ferrite sheet, or in a manner to insert-mold a ferromagnetic material to the first housing 210.

According to an embodiment, the second portion 321b may concentrate the electromagnetic field generated by the electromagnetic member 323b to the second portion 321b by using a ferromagnetic material having a higher relative magnetic permeability (e.g., having a relative magnetic permeability of about 10 or more) than other portions of the first hinge plate 202a. Examples of ferromagnetic materials include, but are not limited to, materials such as iron, mu metal, ferrite, permalloy, carbon steel, and/or nickel. The second portion 321b may be manufactured to be attached to the surface of the second housing 220 (or the second hinge plate 202b) in the form of a ferrite sheet, or in a manner to insert-mold a ferromagnetic material to the first housing 220.

According to an embodiment, at the first position (e.g., the folded state of FIG. 3), the electromagnetic sensor 323a and the electromagnetic member 323b may be disposed at positions substantially facing each other. It should be noted that since the electromagnetic sensor 323a and the electromagnetic member 323b are not visually exposed to the external space, the electromagnetic sensor 323a and the electromagnetic member 323b do not directly face each other even at the first position. As the second housing 202 is unfolded from the first position with respect to the first housing 210 or the electromagnetic sensor 323a, the electromagnetic member 323b may gradually move away from the electromagnetic sensor 323a. For example, as the second housing 220 is unfolded from the first position, the intensity of the electromagnetic field detected by the electromagnetic sensor 323a may gradually decrease. The electronic device 300 (e.g., the processor 120 of FIG. 1) may calculate the angle at which the second housing 220 is unfolded from the first position based on the change in the magnetic flux density or the currently detected magnetic flux density.

According to an embodiment, at the second position (e.g., the unfolded state), the electromagnetic sensor 323a, the first portion 321a, the second portion 321b, and the electromagnetic member 323b may be sequentially arranged along a direction (e.g., the X-axis direction) crossing the folding axis A. For example, at the second position, the first portion 321a and the second portion 321b may be disposed between the electromagnetic sensor 323a and the electromagnetic member 323b to transmit an electromagnetic field generated by the electromagnetic member 323b and guide the electromagnetic field to the electromagnetic sensor 323a. For example, the first portion 321a and the second portion 321b may have different permeability with respect to other portions of the first hinge plate 202a or the second hinge plate 202b, so that the electromagnetic field generated in the electromagnetic member 323b may be distributed in a direction in which the electromagnetic sensor 323a is disposed. In an embodiment, in distributing the electromagnetic field generated in the electromagnetic member 323b in the direction in which the electromagnetic sensor 323a is disposed, the first portion 321a and the second portion 321b may have a shape of a linear waveguide or a shape of a tapered waveguide. **In** the embodiment of FIG. 6, the first portion 321a and/or the second portion 321b are illustrated in a generally tapered shape. In an embodiment, in the second position (e.g., the unfolded state), the electromagnetic sensor 323a, the first portion 321a, the second portion 321b, and the electromagnetic member 323b may be at least partially arranged on the same plane.

According to an embodiment, when the electromagnetic sensor 323a is disposed closer to the folding axis A or the electromagnetic member 323b, the electronic device 300 may further include a first wiring board 362a extending from the first circuit board 262. The first wiring board 362a may be, e.g., a flexible printed circuit board, and the electromagnetic sensor 323a may be disposed on the first wiring board 362a between the folding axis A and the first circuit board 262 or between the first portion 321a and the first circuit board 262. For example, the electromagnetic sensor 323a may be electrically connected to the first circuit board 262 by using the first wiring board 362a and may be disposed close to the electromagnetic member 323b. As described above, as the first wiring board 362a is disposed, it may be easy to detect an electromagnetic field even if the electromagnetic sensor 323a having a slightly lower sensitivity is disposed. According to an embodiment, even when the first wiring board 362a is not used, when the electromagnetic sensor 323a may sufficiently detect the electromagnetic field generated by the electromagnetic member 323b, the electromagnetic sensor 323a may be disposed on the first circuit board 262. An example in which the electromagnetic sensor 323a is disposed on the first circuit board 262 will be described with reference to FIG. 7.

According to an embodiment, in the structure illustrated in FIGS. 4 to 6, as the second housing 220 rotates, the position of the electromagnetic member 323b with respect to the electromagnetic sensor 323a may be changed in the Z-axis direction and/or the X-axis direction. For example, in a structure in which the second housing 220 rotates about the folding axis A parallel to the Y-axis direction and the electromagnetic sensor 323a and the electromagnetic member 323b are aligned in the X-axis direction in the unfolded state, the electromagnetic member 323b may remain substantially fixed with respect to the electromagnetic sensor 323a in the Y-axis direction even when the second housing 220 rotates. Accordingly, when the electronic device 200 or 300 of FIGS. 4 to 6 is configured to detect the electromagnetic field in the 3-axis directions, the electromagnetic sensor 323a may detect the electromagnetic field in at least the Z-axis direction and/or at least the X-axis direction, and the electronic device 200 or 300 or the processor 120 may determine the position or displacement of the electromagnetic member 323b and/or the second housing 220 based on the detected information.

According to an embodiment, the aspect of changes in the electromagnetic field detected by the electromagnetic sensor 323a may vary depending on the shape of the electromagnetic member 323b. For example, when the electromagnetic member 323b has a flat plate (e.g., disk) shape, the position of the electromagnetic member 323b may be more accurately calculated based on the Z-axis displacement between the first position and the angle position of about 45 degrees, and the position of the electromagnetic member 323b may be more accurately calculated based on the X-axis displacement from the angle position of about 45 degrees to the unfolded position. Accordingly, the electronic device 200 or 300 or the processor 120 may calculate the folded state or the inclination angle of the second housing 220 based on some of the data detected by the electromagnetic sensor 323a according to the position of the second housing 220 relative to the first housing 210. A configuration for calculating or determining a relative position of the second housing 220 relative to the first housing 210 will be described again in an embodiment to be described below.

FIG. 7 is an enlarged view illustrating a portion of an electronic device (e.g., the electronic devices 200 and 300 of FIGS. 2 to 5) according to an embodiment of the disclosure.

Referring to FIG. 7, a separate wiring board (e.g., the first wiring board 362a of FIG. 6) may be omitted, and an electromagnetic sensor 323a may be disposed on the first circuit board 262. For example, the electromagnetic sensor 323a may be disposed on the first circuit board 262 depending on the specification of the electromagnetic member 323b, the sensitivity of the electromagnetic sensor 323a, and the shape (or permeability) of the first portion 321a and the second portion 321b. In an embodiment, the first portion 321a or the second portion 321b may have a substantially linear waveguide shape, and may be aligned substantially parallel to the X axis between the electromagnetic sensor 323a and the electromagnetic member 323b in the unfolded state (e.g., the second position illustrated in FIG. 3). For example, it should be noted that the placement of the electromagnetic sensor 323a and/or the description of the shapes of the first portion 321a and the second portion 321b does not limit the embodiment(s) of the disclosure, and may be appropriately selected or combined according to the specific design or internal structure of the electronic devices 200 and 300. Although particular shapes will be described, the present invention is not limited thereto.

FIG. 8 is an enlarged view illustrating a portion of an electronic device (e.g., the electronic devices 200 and 300 of FIGS. 2 to 5) according to an embodiment of the disclosure.

As compared to the embodiment of FIG. 6, the embodiment of FIG. 8 may differ in the configuration in which the electromagnetic member 423b includes a coil (e.g., a solenoid coil). In the following description of the embodiment of FIG. 8, the components easy to understand from the description of the previous embodiments are denoted with the same reference numerals or without reference numerals and their detailed description may be skipped. For example, the components of the embodiment of FIG. 5 or 6 may be applied to the component(s) omitted from the description of the embodiment of FIG. 8.

Referring to FIG. 8, the electromagnetic member 423b may be disposed in the second housing 220 (e.g., the second housing 220 of FIG. 5), e.g., on the second hinge plate 202b. In an embodiment, the electromagnetic member 423b may be implemented in the form of a coil wound at least once, and may generate an electromagnetic field by receiving an electrical signal from the outside. In an embodiment, when the electromagnetic member 423b includes a coil, the electronic device 200 or 300 may include a second wiring board 464a extending from the second circuit board 264. The second wiring board 464a may include, e.g., a cable or a conducting line, and may electrically connect the electromagnetic member 423b to the second circuit board 264.

According to an embodiment, the second wiring board 464a may include a printed circuit pattern formed on a synthetic resin film. When the second wiring board 464a includes a printed circuit pattern, the electromagnetic member 423b (e.g., coil) may be substantially a portion of the printed circuit pattern of the second wiring board 464a. For example, the electromagnetic member 423b may be disposed on the second wiring board 464a. In an embodiment, when the electronic device 200 or 300 includes the second circuit board 264, the electromagnetic member 423b may be disposed between the folding axis A and the second circuit board 264, or between the second portion 321b and the second circuit board 264.

According to an embodiment, when the electromagnetic member 423b is implemented as a coil, the intensity of the electromagnetic field may be adjusted by controlling the intensity of the current applied to the coil. For example, when the electromagnetic member 423b is implemented as a coil, it is possible to provide a stable operating environment for other surrounding electronic components. When the amount of current applied to the coil decreases, or when the distance between the coil (e.g., the electromagnetic member 423b) and the electromagnetic sensor 323a increases, the electromagnetic sensor 323a may be limited in detecting the electromagnetic field generated in the coil due to the influence of the electromagnetic field of the surrounding environment. In an embodiment, the electronic device 200 or 300 or the processor 120 may vary the amount of current applied to the coil (e.g., the electromagnetic member 423b) according to the intensity of the electromagnetic field detected by the electromagnetic sensor 323a. For example, the electronic device 200 or 300 or the processor 120 may determine or calculate the inclination angle or position of the second housing 220 with respect to the first housing 210 by combining data on the intensity of the electromagnetic field detected by the electromagnetic sensor 323a and data on the amount of current applied to the coil. In this way, a measurement that is less susceptible to failure can be achieved.

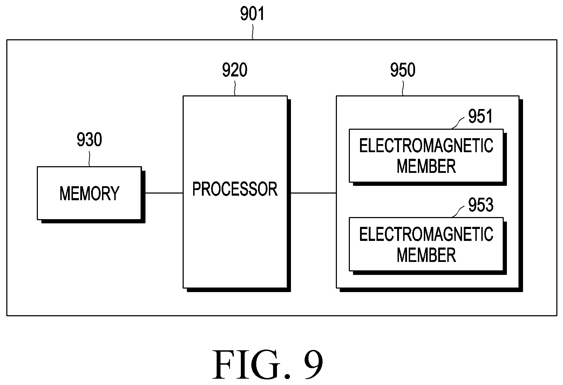

FIG. 9 is a block diagram 900 illustrating an electronic device according to an embodiment.

Referring to FIG. 9, the electronic device 901 (e.g., the electronic device 101 of FIG. 1, the electronic device 200 of FIGS. 2 and 3, and the electronic device 300 of FIG. 5) may include a folding angle detector 950 and a memory 930.

At least some of the components of the electronic device 901 illustrated in FIG. 9 may be identical or similar to the components of the electronic device 101 of FIG. 1, and redundant descriptions will be omitted below.

According to an embodiment, the processor 920 may be implemented substantially identical or similar to the processor 120 of FIG. 1.

According to an embodiment, the processor 920 may control the folding opening/closing angle detector 950 to detect a folded state or an unfolded angle (hereinafter, referred to as a "folding opening/closing angle") of the second housing (e.g., the second housing 220 of FIGS. 2 and 3) with respect to the first housing (e.g., the first housing 210 of FIGS. 2 and 3).

According to the embodiment, while controlling to supply a current to the electromagnetic member 951 of the folding opening/closing angle detector 950, the processor 920 may measure the electromagnetic field generated in the electromagnetic member 951 based on magnetic data received from the electromagnetic sensor 953 of the folding opening/closing angle detector 950, and may detect a folding opening/closing angle corresponding to the density of the electromagnetic field or the density of the magnetic field in a folding opening/closing angle table stored in the memory 930.

According to an embodiment, the processor 920 may identify a change in the density of the electromagnetic field or the density of the magnetic field as compared with the previous density of the electromagnetic field or magnetic field generated from the electromagnetic member 951 of the folding opening/closing angle detector 950 based on the magnetic data received from the electromagnetic sensor 953 of the folding opening/closing angle detector 950 and, upon identifying that the changed electromagnetic field density or magnetic field density reaches a threshold, control to increase or decrease the current supplied to the electromagnetic member 951 of the folding opening/closing angle detector 950. Here, the "threshold" in unfolding (i.e., a first threshold) may be set to differ from the "threshold" in folding (i.e., a second threshold). In an embodiment, the first threshold in unfolding may be set to an electromagnetic field density (or magnetic field density) lower than the second threshold in folding. After controlling to increase or decrease the current supplied to the electromagnetic member 951, of the folding opening/closing angle detector 950, the processor 920 may measure the electromagnetic field generated from the electromagnetic member 951 based on the magnetic data received from the electromagnetic sensor 953 and detect the folding opening/closing angle corresponding to the density of the electromagnetic field in the folding opening/closing angle table stored in the memory 930. Upon identifying that the changed electromagnetic field density reaches the threshold, the processor 920 may increase or decrease the current supplied to the electromagnetic member 951 of the folding opening/closing angle detector 950, preventing the density of the electromagnetic field from being decreased to a noise level. By means of this, it can be guaranteed that a signal level used to perform opening/closing angle detection is always above the noise level.

According to an embodiment, upon identifying that the changed electromagnetic field density reaches the first threshold, the processor 920 may supply the second current, higher than the first current supplied to the electromagnetic member 951, to the electromagnetic member to prevent the changed electromagnetic field density from decreasing to the noise level.

According to an embodiment, upon identifying that the changed electromagnetic field density reaches the second threshold larger than the first threshold, the processor 920 may supply the first current, lower than the second current supplied to the electromagnetic member 951, to the electromagnetic member since the changed electromagnetic field density is not reduced to the noise level.

According to an embodiment, the processor 920 may identify a change in the density of the electromagnetic field generated by the electromagnetic member 951 of the folding opening/closing angle detector 950 based on magnetic data received from the electromagnetic sensor 953 of the folding opening/closing angle detector 950 and, upon identifying that the changed density of the electromagnetic field does not reach a threshold, may detect the folding opening/closing angle corresponding to the changed electromagnetic field density in the folding opening/closing angle table stored in the memory 930.

According to an embodiment, the processor 920 may identify the type (e.g., the X axis, the Y axis, and/or the Z axis of FIG. 4) of the axis capable of detecting the folding opening/closing angle corresponding to the density of the electromagnetic field in the folding opening/closing angle table stored in the memory 930. For example, when the electromagnetic sensor 953 is a 3D sensor, the processor 920 may obtain at least one magnetic data among magnetic data of the X axis, magnetic data of the Y axis, and magnetic data of the Z axis from the electromagnetic sensor 953, and the type of axis using the magnetic data may be different depending on the opening/closing angle of the folding. Accordingly, the electromagnetic field density, axis type, and folding opening/closing angle value may be mapped and stored in the folding opening/closing angle table.

According to an embodiment, the processor 920 may identify the type of the axis to which the folding opening/closing angle value is mapped among the plurality of axes mapped to the density of the electromagnetic field in the folding opening/closing angle table stored in the memory 930, and may detect the folding opening/closing angle value matched to the identified axis. For example, when the folding opening/closing angle value mapped to the first axis (e.g., the X axis) among the plurality of axes mapped to the density of the electromagnetic field may not be detected, the processor 920 may detect the folding opening/closing angle mapped to the second axis (e.g., the Y axis) different from the first axis (e.g., the X axis) among the plurality of axes, and when the folding opening/closing angle mapped to the second axis (e.g., the Y axis) may not be detected, the processor 920 may detect the folding opening/closing angle mapped to the third axis (e.g., the Z axis) different from the second axis (e.g., the Y axis) among the plurality of axes.

According to an embodiment, the folding angle detector 950 may include an electromagnetic member 951 (e.g., the electromagnetic member 323b of FIGS. 5 and 6) and an electromagnetic sensor 953 (e.g., the electromagnetic sensor 323a of FIGS. 5 and 6).

According to an embodiment, the electromagnetic member 951 may be disposed in the first housing (e.g., the first housing 210 of FIGS. 2 and 3) of the electronic device 901, may receive a current under the control of the processor 920, and may generate different electromagnetic fields according to a change in the folding opening/closing angle.

According to an embodiment, the electromagnetic member 951 may include a coil.

According to an embodiment, the electromagnetic sensor 953 may be disposed in the second housing (e.g., the second housing 220 of FIGS. 2 and 3) of the electronic device 901, may obtain magnetic data for an electromagnetic field generated by the electromagnetic sensor 953, and may transmit the obtained magnetic data to the processor 920.

According to an embodiment, the electromagnetic sensor 953 may include a magnetic sensor, a 3D magnetic sensor, a hall sensor, or a 3D hall sensor. However, the magnetic sensor is not limited to the aforementioned sensors.

According to an embodiment, the memory 930 may be implemented to be substantially the same or similar to the memory 130 of FIG. 1.

According to an embodiment, the folding opening/closing angle table may be stored in the memory 930, and the density of the electromagnetic field, the type of the axis, and the folding opening/closing angle value may be mapped to each other and stored in the folding opening/closing angle table.

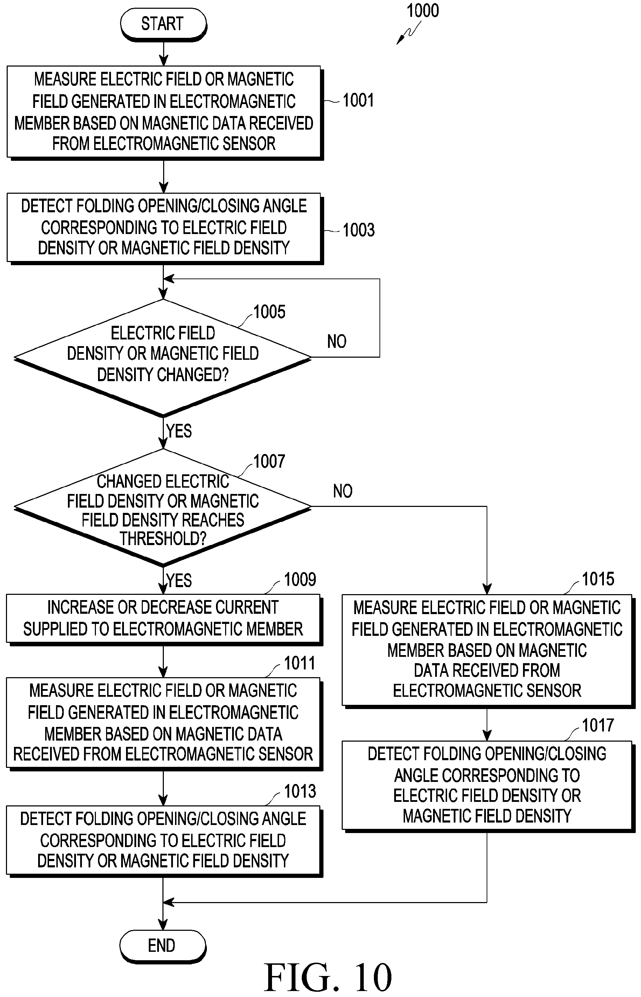

FIG. 10 is a flowchart 1000 illustrating an operation of detecting a folding opening/closing angle using an electromagnetic field in an electronic device according to an embodiment. Operations of detecting the folding opening/closing angle may include operations 1001 to 1017. In the following embodiment, the operations may be sequentially performed, but may be performed non-sequentially. For example, the order of the operations may be changed, and at least two operations may be performed in parallel or other operations may be added.

In operation 1001, the electronic device 901 (e.g., the electronic device 101 of FIG. 1, the electronic device 200 of FIGS. 2 and 3, the electronic device 300 of FIG. 5, and/or the electronic device 901 of FIG. 9) may measure an electromagnetic field generated by an electromagnetic member (e.g., the electromagnetic member 323b of FIGS. 5 and 6 and/or the electromagnetic member 951 of FIG. 9) based on magnetic data received from an electromagnetic sensor (e.g., the electromagnetic sensor 323a of FIGS. 5 and 6 and/or the electromagnetic sensor 953 of FIG. 9).

According to an embodiment, the electronic device may measure an electromagnetic field generated in the electromagnetic member based on magnetic data received from the electromagnetic sensor of the folding opening/closing angle detector while controlling to supply current to the electromagnetic member of the folding opening/closing angle detector (e.g., the folding opening/closing angle detector 950 of FIG. 9).

In operation 1003, the electronic device 901 (e.g., the electronic device 101 of FIG. 1, the electronic device 200 of FIGS. 2 and 3, the electronic device 300 of FIG. 5, and/or the electronic device 901 of FIG. 9) may detect (or calculate) a folding opening/closing angle corresponding to the density of the electromagnetic field.

According to an embodiment, the electronic device may detect the folding opening/closing angle corresponding to the density of the electromagnetic field in the folding opening/closing angle table stored in the memory (e.g., the memory 930) of the electronic device. Said table may also be referred to as a Look Up Table (LUT).

In operation 1005, the electronic device 901 (e.g., the electronic device 101 of FIG. 1, the electronic device 200 of FIGS. 2 and 3, the electronic device 300 of FIG. 5, and/or the electronic device 901 of FIG. 9) may identify whether the density of the electromagnetic field is changed.

According to an embodiment, the electronic device may identify a change in the density of the electromagnetic field when the density of the electromagnetic field generated by the electromagnetic member (e.g., the electromagnetic member 323b of FIGS. 5 and 6 and/or the electromagnetic member 951 of FIG. 9) of the folding opening/closing angle detector is compared with a previous one, based on magnetic data received from the electromagnetic sensor (e.g., the electromagnetic sensor 323a of FIGS. 5 and 6 and/or the electromagnetic sensor 953 of FIG. 9) of the folding opening/closing angle detector (e.g., the folding opening/closing angle detector 950).

Upon identifying the change in the density of the electromagnetic field in operation 1005, the electronic device may identify whether the changed density of the electromagnetic field reaches the threshold in operation 1007.

In operation 1007, upon identifying that the changed density of the electromagnetic field reaches the threshold, the electronic device may increase or decrease the current supplied to the electromagnetic member (e.g., the electromagnetic member 323b of FIGS. 5 and 6 and/or the electromagnetic member 951 of FIG. 9) in operation 1009.

According to an embodiment, upon identifying that the changed electromagnetic field density reaches the first threshold, the electronic device may supply the second current, higher than the first current supplied to the electromagnetic member, to the electromagnetic member to prevent the changed electromagnetic field density from decreasing to the noise level. For example, the density of the electromagnetic field detected in unfolding may gradually increase, and the current supplied to the electromagnetic member may be increased when the first threshold is reached.

According to an embodiment, upon identifying that the changed electromagnetic field density reaches the second threshold larger than the first threshold, the electronic device may supply the first current, lower than the second current supplied to the electromagnetic member, to the electromagnetic member since the changed electromagnetic field density is not reduced to the noise level. For example, the density of the electromagnetic field detected in folding may gradually increase, and the current supplied to the electromagnetic member may be reduced when the second threshold is reached.

In operation 1011, the electronic device 901 (e.g., the electronic device 101 of FIG. 1, the electronic device 200 of FIGS. 2 and 3, the electronic device 300 of FIG. 5, and/or the electronic device 901 of FIG. 9) may measure an electromagnetic field generated by an electromagnetic member (e.g., the electromagnetic member 323b of FIGS. 5 and 6 and/or the electromagnetic member 951 of FIG. 9) based on magnetic data received from an electromagnetic sensor (e.g., the electromagnetic sensor 323a of FIGS. 5 and 6 and/or the electromagnetic sensor 953 of FIG. 9).

According to an embodiment, the electronic device may measure an electromagnetic field generated in the electromagnetic member based on magnetic data received from the electromagnetic sensor after controlling to increase or decrease the current supplied to the electromagnetic member of the folding opening/closing angle detector (e.g., the folding opening/closing angle detector 950 of FIG. 9).

In operation 1013, the electronic device 901 (e.g., the electronic device 101 of FIG. 1, the electronic device 200 of FIGS. 2 and 3, the electronic device 300 of FIG. 5, and/or the electronic device 901 of FIG. 9) may detect a folding opening/closing angle corresponding to the density of the electromagnetic field.

According to an embodiment, the electronic device may detect the folding opening/closing angle corresponding to the density of the electromagnetic field in the folding opening/closing angle table stored in the memory (e.g., the memory 930 of FIG. 9) of the electronic device.

Upon identifying that the changed electromagnetic field density fails to reach the threshold in operation 1007, the electronic device may measure the electromagnetic field generated in the electromagnetic member (e.g., the electromagnetic member 323b of FIGS. 5 and 6 and/or the electromagnetic member 951 of FIG. 9) based on the magnetic data received from the electromagnetic sensor (e.g., the electromagnetic sensor 323a of FIGS. 5 and 6 and/or the electromagnetic sensor 953 of FIG. 9) in operation 1015.

According to an embodiment, the electronic device may measure an electromagnetic field generated in the electromagnetic member based on magnetic data received from the electromagnetic sensor while controlling to supply the same current as the previous one to the electromagnetic member of the folding opening/closing angle detector (e.g., the folding opening/closing angle detector 950 of FIG. 9).

In operation 1017, the electronic device 901 (e.g., the electronic device 101 of FIG. 1, the electronic device 200 of FIGS. 2 and 3, the electronic device 300 of FIG. 5, and/or the electronic device 901 of FIG. 9) may detect a folding opening/closing angle corresponding to the density of the electromagnetic field.

According to an embodiment, the electronic device may detect the folding opening/closing angle corresponding to the density of the electromagnetic field in the folding opening/closing angle table stored in the memory (e.g., the memory 930) of the electronic device.

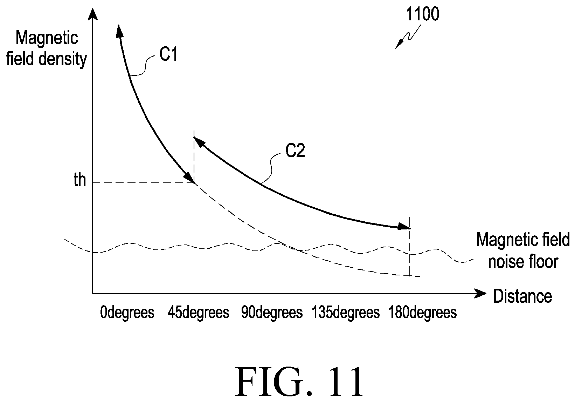

FIG. 11 is a view 1100 illustrating an operation of detecting a folding opening/closing angle using an electromagnetic field in an electronic device according to an embodiment.

Referring to FIG. 11, an electronic device (e.g., the electronic device 101 of FIG. 1, the electronic device 200 of FIGS. 2 and 3, the electronic device 300 of FIG. 5, and/or the electronic device 901 of FIG. 9) may control to supply a first current c1 to an electromagnetic member (e.g., the electromagnetic member 323b of FIGS. 5 and 6 and/or the electromagnetic member 951 of FIG. 9) of a folding opening/closing angle detector (e.g., the folding opening/closing angle detector 950 of FIG. 9) in the unfolded state (e.g., when the folding opening/closing angle is 0 degrees) of the second housing (e.g., the second housing 220 of FIGS. 2 and 3) with respect to the first housing (e.g., the first housing 210 of FIGS. 2 and 3) of the electronic device. While controlling to supply the first current c1 to the electromagnetic member, the electronic device may measure the electromagnetic field generated in the electromagnetic member based on the magnetic data received from the electromagnetic sensor (e.g., the electromagnetic sensor 323a of FIGS. 5 and 6 and/or the electromagnetic sensor 953 of FIG. 9) of the folding opening/closing angle detector and detect the folding opening/closing angle corresponding to the density of the electromagnetic field in the folding opening/closing angle table stored in the memory (e.g., the memory 930 of FIG. 9) of the electronic device.

The electronic device may measure the electromagnetic field generated in the electromagnetic member based on the magnetic data received from the electromagnetic sensor and, upon identifying that the density of the measured electromagnetic field reaches the first threshold th, control to supply a second current c2 higher than the first current c1 to the electromagnetic member. After controlling to supply the second current c2 to the electromagnetic member, the electronic device may measure the electromagnetic field generated in the electromagnetic member based on the magnetic data received from the electromagnetic sensor and detect the folding opening/closing angle corresponding to the density of the electromagnetic field in the folding opening/closing angle table stored in the memory of the electronic device. Hence, the signal level is always kept above the noise level and a failure-free measurement can be performed.

As the electronic device supplies the second current c2 higher than the first current c1 to the electromagnetic member when the electromagnetic field density reaches the first threshold th, it is possible to prevent the density of the electromagnetic field generated in the electromagnetic member from reducing to the noise level (magnetic field noise floor) while the electronic device is changed to the folded state from the unfolding angle of the second housing with respect to the first housing.

The electronic device may measure the electromagnetic field generated in the electromagnetic member based on the magnetic data received from the electromagnetic sensor while controlling to supply the second current c2 to the electromagnetic member and, upon identifying that the density of the measured electromagnetic field reaches a second threshold larger than the first threshold th, control to supply the first current c1 lower than the second current c2 to the electromagnetic member. After controlling to supply the first current c1 to the electromagnetic member, the electronic device may measure the electromagnetic field generated in the electromagnetic member based on the magnetic data received from the electromagnetic sensor and detect the folding opening/closing angle corresponding to the density of the electromagnetic field in the folding opening/closing angle table stored in the memory of the electronic device.

As the electronic device supplies the first current c1, lower than the second current c2, to the electromagnetic member when the electromagnetic field density reaches the second threshold, it is possible to reduce power consumption when folding the second housing with respect to the first housing of the electronic device.

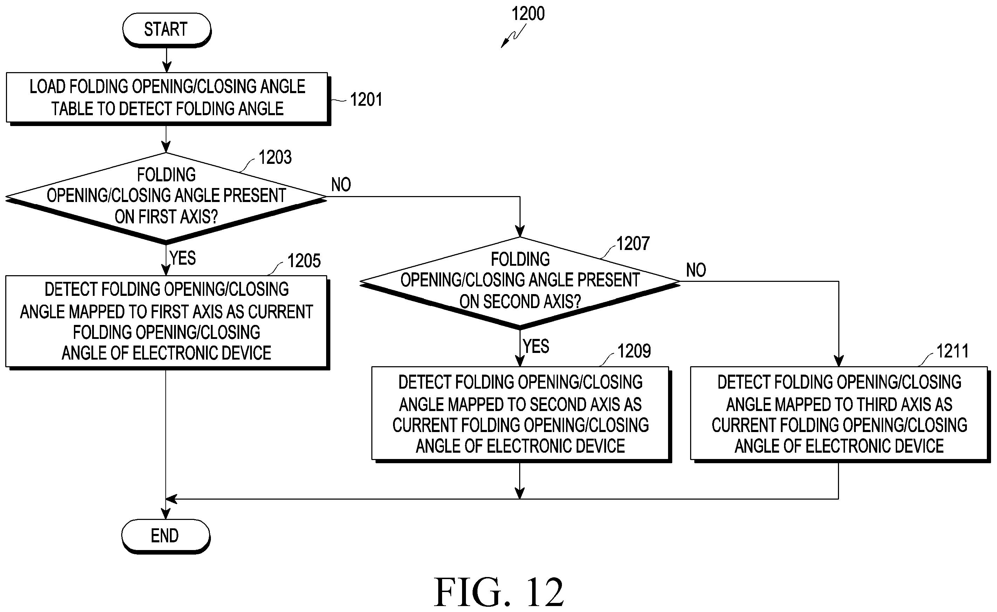

FIG. 12 is a flowchart 1200 illustrating an operation of detecting a folding opening/closing angle using an electromagnetic field in an electronic device according to an embodiment. Operations of detecting the folding opening/closing angle may include operations 1201 to 1211. **In** the following embodiment, the operations may be sequentially performed, but may be performed non-sequentially. For example, the order of the operations may be changed, and at least two operations may be performed in parallel or other operations may be added.

In operation 1201, the electronic device 901 (e.g., the electronic device 101 of FIG. 1, the electronic device 200 of FIGS. 2 and 3, the electronic device 300 of FIG. 5, and/or the electronic device 901 of FIG. 9) may load the folding opening/closing angle table to detect the folding opening/closing angle.

According to the embodiment, upon measuring the electromagnetic field generated by the electromagnetic member (e.g., the electromagnetic member 323b of FIGS. 5 and 6 and/or the electromagnetic member 951 of FIG. 9) of the folding opening/closing angle detector based on magnetic data received from the electromagnetic sensor (e.g., the electromagnetic sensor 323a of FIGS. 5 and 6 and/or the electromagnetic sensor 953 of FIG. 9) of the folding opening/closing angle detector (e.g., the folding opening/closing angle detector 950 of FIG. 9), the electronic device may identify the folding opening/closing angle table stored in the memory (e.g., the memory 930 of FIG. 9) of the electronic device.

In operation 1203, the electronic device 901 (e.g., the electronic device 101 of FIG. 1, the electronic device 200 of FIGS. 2 to 3, the electronic device 300 of FIG. 5, and/or the electronic device 901 of FIG. 9) may identify whether the folding opening/closing angle is present in the first axis information.

According to an embodiment, the electronic device may identify whether the folding opening/closing angle is present, mapped to the first axis (e.g., x axis) information among the plurality of axis information stored in the folding opening/closing angle table.

Upon identifying the presence of the folding opening/closing angle on the first axis in operation 1203, the electronic device may detect the folding opening/closing angle mapped to the first axis as the current folding opening/closing angle of the electronic device in operation 1205.

When the electronic device does not identify the presence of the folding opening/closing angle in the first axis information in operation 1203, the electronic device may identify whether the folding opening/closing angle is present, mapped to the second axis information in operation 1207.

According to an embodiment, the electronic device may identify whether the folding opening/closing angle is present, mapped to the second axis (e.g., y axis) information among the plurality of axis information stored in the folding opening/closing angle table.

Upon identifying the presence of the folding opening/closing angle in the second axis information in operation 1207, the electronic device may detect the folding opening/closing angle mapped to the second axis information as the current folding opening/closing angle of the electronic device in operation 1209.

Upon not identifying the presence of the folding opening/closing angle on the second axis information in operation 1207, the electronic device may detect the folding opening/closing angle mapped to the third axis information as the current folding opening/closing angle of the electronic device in operation 1211.

According to an embodiment, the electronic device may detect the folding opening/closing angle mapped to third axis (e.g., z axis) information among the plurality of pieces of axis information stored in the folding opening/closing angle table as the current folding opening/closing angle of the electronic device.

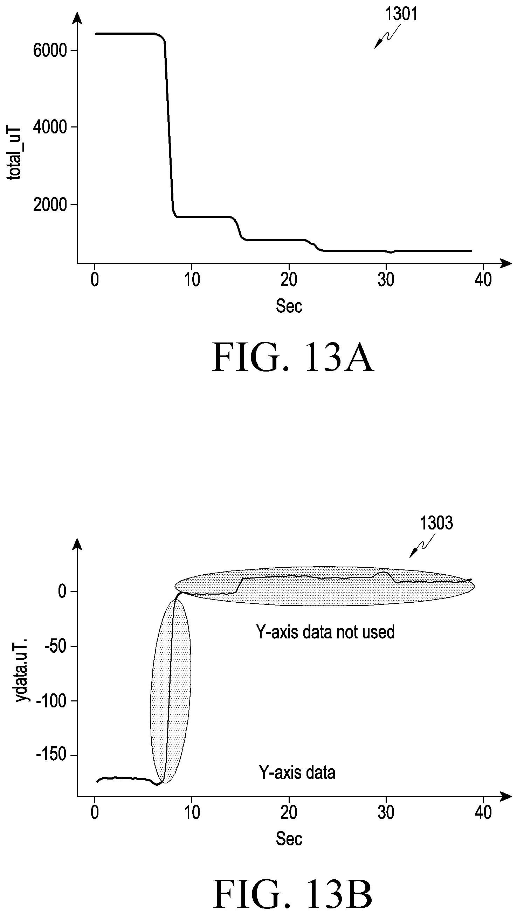

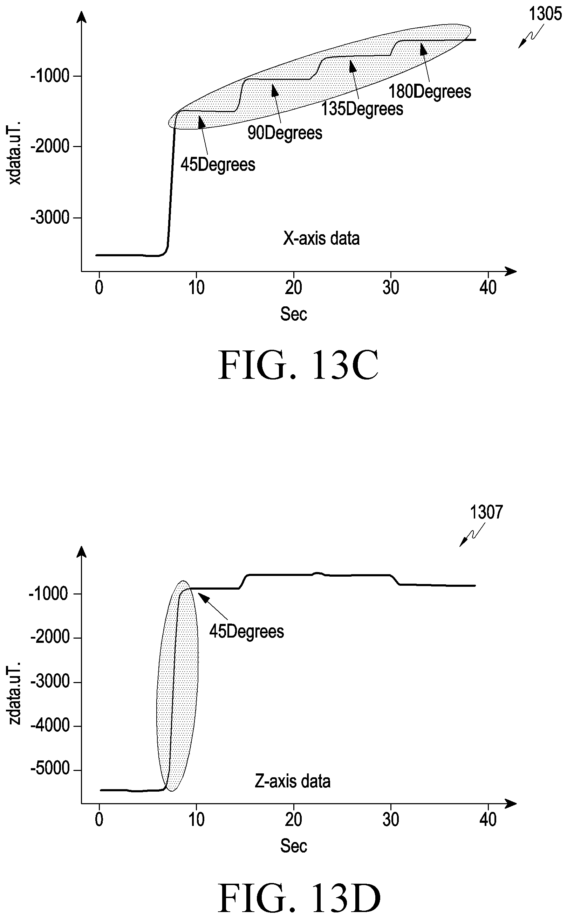

FIGS. 13A, 13B, 13C, and 13D are graphs 1301, 1303, 1305, and 1307 illustrating changes in density of electromagnetic field measured from an electromagnetic member in an electronic device according to an embodiment.

FIGS. 13A, 13B, 13C, and 13D are graphs depicting scalar values of magnetic data of the electromagnetic sensor obtaining the electromagnetic field generated in the electromagnetic member in a state in which the electromagnetic member (e.g., a small disc-shaped magnet) is disposed in the first housing (e.g., the first housing 210 of FIGS. 2 and 3) and the electromagnetic sensor (e.g., a 3D electromagnetic sensor) is disposed in the second housing (e.g., the second housing 220 of FIGS. 2 and 3) of the electronic device (e.g., the electronic device 101 of FIG. 1, the electronic device 200 of FIGS. 2 and 3, the electronic device 300 of FIG. 5, and/or the electronic device 901 of FIG. 9) in which the display area (e.g., the display area 240 of FIGS. 2 and 3) is divided by the folding area (e.g., the folding area 243 of FIGS. 2 and 3) or folding axis (e.g., the folding axis A (axis A) of FIGS. 2 and 3) extending parallel to the Y axis.

FIG. 13A is a graph illustrating scalar values of the magnetic data of three axes (e.g., X axis, Y axis, and Z axis) using the electromagnetic sensor (e.g., a 3D electromagnetic sensor) for the magnetic data generated in the electromagnetic member (e.g., a small disc-shaped magnet), FIG. 13B is a graph illustrating scalar values of the magnetic data of the Y axis, FIG. 13C is a graph illustrating scalar values of the magnetic data of the X axis, and FIG. 13D is a graph illustrating scalar values of the magnetic data of the Z axis.

As shown in the graphs, the folding opening/closing angle may be detected using magnetic data of the Z axis from 0 degrees to 45 degrees, and the folding opening/closing angle may be detected using magnetic data of the X axis from 45 degrees to 180 degrees.

Accordingly, in the folding opening/closing angle table stored in the memory (e.g., the memory 930 of FIG. 9) of the electronic device 901 (e.g., the electronic device 101 of FIG. 1, the electronic device 200 of FIGS. 2 and 3, and/or the electronic device 901 of FIG. 9), for accurate detection of the folding opening/closing angle, the density of the electromagnetic field, the information about the axes (e.g., the X axis and the Z axis), and the folding opening/closing angle value may be mapped to each other and stored.

As described above, the electronic device (e.g., the electronic device 101, 200, or 300 of FIGS. 1 to 5) according to the embodiment(s) of the disclosure may detect the relative position of the first housing (e.g., the first housing 210 of FIGS. 2 to 5) and the second housing (e.g., the second housing 220 of FIGS. 2 to 5) or the partial orientation of the screen display area even when one electromagnetic sensor (e.g., the electromagnetic sensor 323a of FIGS. 6 to 8, e.g., the three-dimensional hall sensor) is used. For example, even if the internal space of the electronic device is small, it may be easy to install. In an embodiment, although one electromagnetic sensor and/or electromagnetic member (e.g., a permanent magnet or coil as the electromagnetic member 323b or 423b of FIGS. 6 to 8) is used, the partial orientation of the screen display area is easy to detect, so that placement of an additional sensor may be suppressed, saving manufacturing costs. Since the electronic device may adjust the currently output screen based on the information detected regarding the relative positions of the first housing and the second housing or the partial orientation of the screen display area, the electronic device may provide various user experiences suitable for the actual use environment. As the electronic device adjusts the current supplied to the electromagnetic member based on a change in the density of the electromagnetic field or the density of the magnetic field generated from the electromagnetic member, the electronic device may prevent the electromagnetic field generated from the electromagnetic member from decreasing to the noise level or increasing power consumption.

Effects of the disclosure are not limited to the foregoing, and other unmentioned effects would be apparent to one of ordinary skill in the art from the description of the foregoing embodiment(s). However, the scope of the present invention is defined by the appended claims.

According to an embodiment of the disclosure, an electronic device (e.g., the electronic device 101, 200, or 300 of FIGS. 1 to 5) may comprise a housing (e.g., the housing 201 of FIG. 2 or 4) including a first housing (e.g., the first housing 210 of FIGS. 2 to 5) and a second housing (e.g., the second housing 220 of FIGS. 2 to 5) configured to rotate relative to the first housing about a folding axis (e.g., the folding axis A of FIG. 2 or 5), an electromagnetic member (e.g., the electromagnetic member 323b or 423b of FIGS. 6 to 8) disposed in either the first housing or the second housing and configured to generate an electromagnetic field, an electromagnetic sensor (e.g., the electromagnetic sensor 323a of FIGS. 6 to 8) disposed in the other of the first housing and the second housing and configured to detect the electromagnetic field, and a hinge structure (e.g., the hinge module 202 of FIGS. 4 to 8) disposed inside the housing to provide the folding axis and rotatably coupling the first housing and the second housing. **In** an embodiment, the hinge structure may include a first hinge plate (e.g., the first hinge plate 202a of FIGS. 4 to 8) disposed in the first housing and including a first portion (e.g., the first portion 321a of FIGS. 5 to 8) configured to transmit the electromagnetic field, and a second hinge plate (e.g., the second hinge plate 202b of FIGS. 4 to 8) disposed in the second housing, rotatably coupled to the first hinge plate, and including a second portion (e.g., the second portion 321b of FIGS. 5 to 8) configured to transmit the electromagnetic field. In an embodiment, the first portion may be disposed between the folding axis and the electromagnetic sensor, and the second portion may be disposed between the folding axis and the electromagnetic member.

According to an embodiment, the second housing may be configured to rotate between a first position (e.g., see FIG. 3) where the second housing faces the first housing and a second position (e.g., see FIG. 2) where the second housing is unfolded from the first position by a designated angle. In an embodiment, at the second position, the first portion and the second portion may be disposed between the electromagnetic sensor and the electromagnetic member.

According to an embodiment, the second housing may be configured to rotate between a first position where the second housing faces the first housing and a second position where the second housing is unfolded from the first position by a designated angle, and at the second position, the electromagnetic sensor, the first portion, the second portion, and the electromagnetic member may be sequentially arranged along a direction crossing the folding axis.

According to an embodiment, the electronic device may further comprise a first circuit board (e.g., the first circuit board 262 of FIGS. 4 to 8) received in the first housing and a first wiring board (e.g., the first wiring board 362a of FIG. 6 or 8) extending from the first circuit board. In an embodiment, the electromagnetic sensor may be disposed on the first wiring board between the first portion and the first circuit board.

According to an embodiment, the electromagnetic member may include a permanent magnet.

According to an embodiment, the electromagnetic member (e.g., the electromagnetic member 423b of FIG. 8) may include a coil receiving a current to generate the electromagnetic field.

According to an embodiment, the electronic device may further comprise a second circuit board (e.g., the second circuit board 264 of FIGS. 4 to 8) received in the second housing and a second wiring board (e.g., the second wiring board 464a of FIG. 8) extending from the second circuit board. **In an** embodiment, the coil may be disposed between the second portion and the second circuit board to be electrically connected to the second circuit board through the second wiring board.

According to an embodiment, the coil may include a solenoid coil.

According to an embodiment, the electronic device may further comprise a display including a first display area (e.g., the first display area 241 of FIG. 2 or 4) disposed on the first housing, a second display area (e.g., the second display area 242 of FIG. 2 or 4) disposed on the second housing, and a folding area (e.g., the folding area 243 of FIG. 2 or 4) positioned between the first display area and the second display area.

According to an embodiment, the first portion or the second portion may include a synthetic resin material.

According to an embodiment, the electronic device may further comprise a processor (e.g., the processor 120 of FIG. 1 or the processor 920 of FIG. 9). In an embodiment, the second housing may be configured to rotate between a first position where the second housing faces the first housing and a second position where the second housing is unfolded from the first position by a designated angle. In an embodiment, the processor may be configured to determine a state of being at the first position or calculate an unfolded angle of the second housing with respect to the first housing, based on the electromagnetic field detected by the electromagnetic sensor.

According to an embodiment, the processor (e.g., the processor 120 of FIG. 1 or the processor 920 of FIG. 9) may identify a change in a density of the electromagnetic field detected by the electromagnetic sensor and, upon identifying that the changed density of the electromagnetic field reaches a threshold, increase or decrease a current supplied to the electromagnetic member. According to an embodiment, the processor (e.g., the processor 120 of FIG. 1 or the processor 920 of FIG. 9) may determine the state of being at the first position or calculate the unfolded angle of the second housing with respect to the first housing, based on the electromagnetic field detected by the electromagnetic sensor after supplying the current to the electromagnetic member to increase or decrease.

According to an embodiment, the processor (e.g., the processor 120 of FIG. 1 or the processor 920 of FIG. 9) may supply a second current higher than the first current to the electromagnetic member upon identifying that the density of the electromagnetic field reaches a first threshold while the first current is supplied to the electromagnetic member.

According to an embodiment, the processor (e.g., the processor 120 of FIG. 1 or the processor 920 of FIG. 9) may supply the first current lower than the second current to the electromagnetic member upon identifying that the density of the electromagnetic field reaches a second threshold larger than the first threshold while the second current is supplied to the electromagnetic member.

According to an embodiment, the processor (e.g., the processor 120 of FIG. 1 or the processor 920 of FIG. 9) may determine the state of being at the first position or calculate the unfolded angle of the second housing with respect to the first housing, based on the electromagnetic field detected by the electromagnetic sensor upon identifying that the density of the electromagnetic field fails to reach the first threshold while the first current is supplied to the electromagnetic member.

According to an embodiment, the processor (e.g., the processor 120 of FIG. 1 or the processor 920 of FIG. 9) may determine the first position corresponding to the electromagnetic field detected by the electromagnetic sensor in a folding angle table stored in a memory of the electronic device or calculate the unfolded angle of the second housing with respect to the first housing.

According to an embodiment, the processor (e.g., the processor 120 of FIG. 1 or the processor 920 of FIG. 9) may, when the first position or the unfolded angle of the second housing with respect to the first housing is mapped to first axis information among a plurality of axis information stored in a folding angle table stored in a memory of the electronic device, calculate the first position or the unfolded angle of the second housing with respect to the first housing, mapped to the first axis information.

According to an embodiment, the processor (e.g., the processor 120 of FIG. 1 or the processor 920 of FIG. 9) may, when the first position or the unfolded angle of the second housing with respect to the first housing is not mapped to first axis information among a plurality of axis information stored in a folding angle table stored in a memory of the electronic device, identify that the first position or the unfolded angle of the second housing with respect to the first housing is mapped to second axis information different from the first axis information among the plurality of axis information and calculate the first position or the unfolded angle of the second housing with respect to the first housing, mapped to the second axis information.

According to an embodiment of the disclosure, an electronic device (e.g., the electronic device 101, 200, or 300 of FIGS. 1 to 5) may comprise a first housing (e.g., the first housing 210 of FIGS. 2 to 5), a second housing (e.g., the second housing 220 of FIGS. 2 to 5) configured to rotate between a first position (e.g., see FIG. 3) where the second housing faces the first housing and a second position (e.g., see FIG. 2) unfolded from the first position by a designated angle about a folding axis (e.g., the folding axis A of FIG. 2 or 5), an electromagnetic member (e.g., the electromagnetic member 323b or 423b of FIGS. 6 to 8) disposed in either the first housing or the second housing and configured to generate an electromagnetic field, an electromagnetic sensor (e.g., the electromagnetic sensor 323a of FIGS. 6 to 8) disposed in the other of the first housing and the second housing and configured to detect the electromagnetic field, a hinge structure (e.g., the hinge module 202 of FIGS. 4 to 8) disposed inside the housing to provide the folding axis and rotatably coupling the first housing and the second housing, and a processor (e.g., the processor 120 of FIG. 1) configured to determine a state of being at the first position or calculate an unfolded angle of the second housing with respect to the first housing, based on the electromagnetic field detected by the electromagnetic sensor, wherein the hinge structure includes: a first hinge plate disposed in the first housing and including a first portion configured to transmit the electromagnetic field; and a second hinge plate disposed in the second housing, rotatably coupled to the first hinge plate, and including a second portion configured to transmit the electromagnetic field, wherein the first portion is disposed between the folding axis and the electromagnetic sensor, and the second portion is disposed between the folding axis and the electromagnetic member, and wherein at the second position, the first portion and the second portion are disposed between the electromagnetic sensor and the electromagnetic member. In an embodiment, the hinge structure may include a first hinge plate (e.g., the first hinge plate 202a of FIGS. 4 to 8) disposed in the first housing and including a first portion (e.g., the first portion 321a of FIGS. 5 to 8) configured to transmit the electromagnetic field, and a second hinge plate (e.g., the second hinge plate 202b of FIGS. 4 to 8) disposed in the second housing, rotatably coupled to the first hinge plate, and including a second portion (e.g., the second portion 321b of FIGS. 5 to 8) configured to transmit the electromagnetic field. In an embodiment, the first portion may be disposed between the folding axis and the electromagnetic sensor, and the second portion may be disposed between the folding axis and the electromagnetic member. In an embodiment, at the second position, the first portion and the second portion may be disposed between the electromagnetic sensor and the electromagnetic member.

According to an embodiment, at the second position, the electromagnetic sensor, the first portion, the second portion, and the electromagnetic member may be sequentially arranged along a direction crossing the folding axis.

While the disclosure has been described and shown in connection with an embodiment thereof, it should be appreciated that an embodiment is intended as limiting the invention but as illustrative. **It** will be apparent to one of ordinary skill in the art that various changes may be made in form and detail without departing from the overall scope of the disclosure, including the appended claims. For example, one of the electromagnetic sensors of FIGS. 6 to 8, one of the electromagnetic members of FIGS. 6 to 8, one of the first portion and the second portion of FIGS. 6 to 8, and/or the wiring board(s) of FIGS. 6 to 8 may be selectively combined to implement additional embodiments. In an embodiment, the electromagnetic sensor and the electromagnetic member may be disposed at positions where they replace each other. For example, the electromagnetic member may be disposed in the first housing, and the electromagnetic sensor may be disposed in the second housing.

## Claims

1. An electronic device (101, 200, 300, 901) comprising:
a housing (201) including a first housing (210) and a second housing (220) configured to rotate relative to the first housing (210) about a folding axis (A);
an electromagnetic member (323b, 423b, 951) disposed in either the first housing (210) or the second housing (220) and configured to generate an electromagnetic field;
an electromagnetic sensor (323a, 953) disposed in the other of the first housing (210) and the second housing (220) and configured to detect the electromagnetic field; and
a hinge structure disposed inside the housing (201) to provide the folding axis (A) and
configured to rotatably couple the first housing (210) and the second housing (220),
wherein the hinge structure includes:
a first hinge plate (202a) disposed in the first housing (210) and including a first portion (321a) configured to guide the electromagnetic field by having a different electromagnetic permeability than other portions of the first hinge plate (202a); and
a second hinge plate (202b) disposed in the second housing (220), rotatably coupled to the first hinge plate (202a), and including a second portion (321b) configured to guide the electromagnetic field by having a different electromagnetic permeability than other portions of the second hinge plate (202b), and
wherein the first portion (321a) is disposed between the folding axis (A) and the electromagnetic sensor (323a, 953), and the second portion (321b) is disposed between the folding axis (A) and the electromagnetic member (323b, 423b, 951).

2. The electronic device (101, 200, 300, 901) of claim 1, wherein the second housing (220) is configured to rotate between a first position where the second housing (220) faces the first housing (210) and a second position where the second housing (220) is unfolded from the first position by a designated angle, and
wherein at least one of the following applies:
at the second position, the first portion (321a) and the second portion (321b) are disposed between the electromagnetic sensor (323a, 953) and the electromagnetic member (323b, 423b, 951),
at the second position, the electromagnetic sensor (323a, 953), the first portion (321a), the second portion (321b), and the electromagnetic member (323b, 423b, 951) are sequentially arranged along a direction crossing the folding axis (A), and
the electronic device (101, 200, 300, 901) further comprises a processor (120, 920) configured to determine a state of being at the first position or calculate an unfolded angle of the second housing (220) with respect to the first housing (210), based on the electromagnetic field detected by the electromagnetic sensor (323a, 953).

3. The electronic device (101, 200, 300, 901) of claim 1 or claim 2, further comprising:
a first circuit board (262) received in the first housing (210); and
a first wiring board (362a) configured to extending from the first circuit board (262),
wherein the electromagnetic sensor (323a, 953) is disposed on the first wiring board (362a) between the first portion (321a) and the first circuit board (262).

4. The electronic device (101, 200, 300, 901) of any one of claims 1 to 3, wherein the electromagnetic member (323b, 423b, 951) includes a permanent magnet.

5. The electronic device (101, 200, 300, 901) of any one of claims 1 to 3, wherein the electromagnetic member (323b, 423b, 951) includes a coil configured to receive a current to generate the electromagnetic field.

6. The electronic device (101, 200, 300, 901) of claim 5, further comprising:
a second circuit board (264) received in the second housing (220); and
a second wiring board (464a) extending from the second circuit board (264),
wherein the coil is disposed between the second portion (321b) and the second circuit board (264) to be electrically connected to the second circuit board (264) through the second wiring board (464a).

7. The electronic device (101, 200, 300, 901) of claim 5 or 6, wherein the coil includes a solenoid coil.

8. The electronic device (101, 200, 300, 901) of any one of claims 1 to 7, further comprising:
a display including a first display area (241) disposed on the first housing (210), a second display area (242) disposed on the second housing (220), and a folding area (203, 243) positioned between the first display area (241) and the second display area (242).

9. The electronic device (101, 200, 300, 901) of any one of claims 1 to 8, wherein the first portion (321a) or the second portion (321b) includes a synthetic resin material.

10. The electronic device (101, 200, 300, 901) of any one of claims 5 to 7, wherein the processor (120, 920) is configured to:
identify a change in a density of the electromagnetic field detected by the electromagnetic sensor (323a, 953) and, upon identifying that the changed density of the electromagnetic field reaches a threshold, increase or decrease a first current supplied to the electromagnetic member (323b, 423b, 951); and
determine the state of being at the first position or calculate the unfolded angle of the second housing (220) with respect to the first housing (210), based on the electromagnetic field detected by the electromagnetic sensor (323a, 953) after supplying the first current to the electromagnetic member (323b, 423b, 951) to increase or decrease.

11. The electronic device (101, 200, 300, 901) of any one of claims 5 to 7 and 10, wherein the processor (120, 920) is configured to
supply a second current higher than the first current to the electromagnetic member (323b, 423b, 951) upon identifying that the density of the electromagnetic field reaches a first threshold (th) while the first current is supplied to the electromagnetic member (323b, 423b, 951), or
supply the first current lower than the second current to the electromagnetic member (323b, 423b, 951) upon identifying that the density of the electromagnetic field reaches a second threshold larger than the first threshold (th) while the second current is supplied to the electromagnetic member (323b, 423b, 951).

12. The electronic device (101, 200, 300, 901) of claim 11, wherein the processor (120, 920) is configured to
determine the state of being at the first position or calculate the unfolded angle of the second housing (220) with respect to the first housing (210), based on the electromagnetic field detected by the electromagnetic sensor (323a, 953) upon identifying that the density of the electromagnetic field fails to reach the first threshold (th) while the first current is supplied to the electromagnetic member (323b, 423b, 951).

13. The electronic device (101, 200, 300, 901) of any one of claims 2 to 12, wherein the processor (120, 920) is configured to
determine the first position corresponding to the electromagnetic field detected by the electromagnetic sensor (323a, 953) in a folding angle table stored in a memory (130, 930) of the electronic device (101, 200, 300, 901) or calculate the unfolded angle of the second housing (220) with respect to the first housing (210).

14. The electronic device (101, 200, 300, 901) of any one of claims 2 to 13, wherein the processor (120, 920) is configured to
when the first position or the unfolded angle of the second housing (220) with respect to the first housing (210) is mapped to first axis information among a plurality of axis information stored in a folding angle table stored in a memory (130, 930) of the electronic device (101, 200, 300, 901), calculate the first position or the unfolded angle of the second housing (220) with respect to the first housing (210), mapped to the first axis information.

15. The electronic device (101, 200, 300, 901) of any one of claims 2 to 14, wherein the processor (120, 920) is configured to
when the first position or the unfolded angle of the second housing (220) with respect to the first housing (210) is not mapped to first axis information among a plurality of axis information stored in a folding angle table stored in a memory (130, 930) of the electronic device (101, 200, 300, 901), identify that the first position or the unfolded angle of the second housing (220) with respect to the first housing (210) is mapped to second axis information different from the first axis information among the plurality of axis information and calculate the first position or the unfolded angle of the second housing (220) with respect to the first housing (210), mapped to the second axis information.

## Patentansprüche

1. Elektronische Vorrichtung (101, 200, 300, 901), umfassend:
ein Gehäuse (201), das ein erstes Gehäuse (210) und ein zweites Gehäuse (220), das dazu ausgelegt ist, sich im Verhältnis zu dem ersten Gehäuse (210) um eine Faltachse (A) zu drehen, beinhaltet;
ein elektromagnetisches Element (323b, 423b, 951), das entweder in dem ersten Gehäuse (210) oder dem zweiten Gehäuse (220) angeordnet und dazu ausgelegt ist, ein elektromagnetisches Feld zu erzeugen;
einen elektromagnetischen Sensor (323a, 953), der in dem anderen von dem ersten Gehäuse (210) und dem zweiten Gehäuse (220) angeordnet und dazu ausgelegt ist, das elektromagnetische Feld zu erfassen; und
eine Gelenkstruktur, die im Inneren des Gehäuses (201) angeordnet ist, um die Faltachse (A) bereitzustellen, und dazu ausgelegt ist, das erste Gehäuse (210) und das zweite Gehäuse (220) drehbar zu koppeln,
wobei die Gelenkstruktur Folgendes beinhaltet:
eine erste Gelenkplatte (202a), die in dem ersten Gehäuse (210) angeordnet ist und einen ersten Abschnitt (321a) beinhaltet, der dazu ausgelegt ist, das elektromagnetische Feld zu führen, indem er eine andere elektromagnetische Permeabilität aufweist als andere Abschnitte der ersten Gelenkplatte (202a); und
eine zweite Gelenkplatte (202b), die in dem zweiten Gehäuse (220) angeordnet ist, drehbar an die erste Gelenkplatte (202a) gekoppelt ist und einen zweiten Abschnitt (321b) beinhaltet, der dazu ausgelegt ist, das elektromagnetische Feld zu führen, indem er eine andere elektromagnetische Permeabilität als andere Abschnitte der zweiten Gelenkplatte (202b) aufweist, und
wobei der erste Abschnitt (321a) zwischen der Faltachse (A) und dem elektromagnetischen Sensor (323a, 953) angeordnet ist und der zweite Abschnitt (321b) zwischen der Faltachse (A) und dem elektromagnetischen Element (323b, 423b, 951) angeordnet ist.

2. Elektronische Vorrichtung (101, 200, 300, 901) nach Anspruch 1, wobei das zweite Gehäuse (220) dazu ausgelegt ist, sich zwischen einer ersten Position, in der das zweite Gehäuse (220) dem ersten Gehäuse (210) zugewandt ist, und einer zweiten Position, in der das zweite Gehäuse (220) aus der ersten Position um einen vorgegebenen Winkel entfaltet ist, zu drehen, und
wobei mindestens eines der Folgenden gilt:
in der zweiten Position sind der erste Abschnitt (321a) und der zweite Abschnitt (321b) zwischen dem elektromagnetischen Sensor (323a, 953) und dem elektromagnetischen Element (323b, 423b, 951) angeordnet,
in der zweiten Position sind der elektromagnetische Sensor (323a, 953), der erste Abschnitt (321a), der zweite Abschnitt (321b) und das elektromagnetische Element (323b, 423b, 951) nacheinander entlang einer Richtung angeordnet, welche die Faltachse (A) schneidet, und
die elektronische Vorrichtung (101, 200, 300, 901) umfasst ferner einen Prozessor (120, 920), der dazu ausgelegt ist, einen Zustand, sich in der ersten Position zu befinden, zu bestimmen oder einen Entfaltungswinkel des zweiten Gehäuses (220) in Bezug auf das erste Gehäuse (210) auf Grundlage des von dem elektromagnetischen Sensor (323a, 953) erfassten elektromagnetischen Feldes zu berechnen.

3. Elektronische Vorrichtung (101, 200, 300, 901) nach Anspruch 1 oder 2, ferner umfassend:
eine erste Leiterplatte (262), die in dem ersten Gehäuse (210) aufgenommen ist; und
eine erste Verdrahtungsplatte (362a), die so ausgelegt ist, dass sie sich von der ersten Leiterplatte (262) erstreckt,
wobei der elektromagnetische Sensor (323a, 953) auf der ersten Verdrahtungsplatte (362a) zwischen dem ersten Abschnitt (321a) und der ersten Leiterplatte (262) angeordnet ist.

4. Elektronische Vorrichtung (101, 200, 300, 901) nach einem der Ansprüche 1 bis 3, wobei das elektromagnetische Element (323b, 423b, 951) einen Permanentmagneten beinhaltet.

5. Elektronische Vorrichtung (101, 200, 300, 901) nach einem der Ansprüche 1 bis 3, wobei das elektromagnetische Element (323b, 423b, 951) eine Spule beinhaltet, die dazu ausgelegt ist, einen Strom aufzunehmen, um das elektromagnetische Feld zu erzeugen.

6. Elektronische Vorrichtung (101, 200, 300, 901) nach Anspruch 5, ferner umfassend:
eine zweite Leiterplatte (264), die in dem zweiten Gehäuse (220) aufgenommen ist; und
eine zweite Verdrahtungsplatte (464a), die sich von der zweiten Leiterplatte (264) erstreckt,
wobei die Spule zwischen dem zweiten Abschnitt (321b) und der zweiten Leiterplatte (264) angeordnet ist, um mit der zweiten Leiterplatte (264) über die zweite Verdrahtungsplatte (464a) elektrisch verbunden zu werden.

7. Elektronische Vorrichtung (101, 200, 300, 901) nach Anspruch 5 oder 6, wobei die Spule eine Magnetspule beinhaltet.

8. Elektronische Vorrichtung (101, 200, 300, 901) nach einem der Ansprüche 1 bis 7, ferner umfassend:
eine Anzeige, die einen ersten Anzeigebereich (241), der an dem ersten Gehäuse (210) angeordnet ist, einen zweiten Anzeigebereich (242), der an dem zweiten Gehäuse (220) angeordnet ist, und
einen Faltbereich (203, 243), der zwischen dem ersten Anzeigebereich (241) und dem zweiten Anzeigebereich (242) positioniert ist, beinhaltet.

9. Elektronische Vorrichtung (101, 200, 300, 901) nach einem der Ansprüche 1 bis 8, wobei der erste Abschnitt (321a) oder der zweite Abschnitt (321b) ein Kunstharzmaterial beinhaltet.

10. Elektronische Vorrichtung (101, 200, 300, 901) nach einem der Ansprüche 5 bis 7, wobei der Prozessor (120, 920) zu Folgendem ausgelegt ist:
Feststellen einer Änderung einer Dichte des von dem elektromagnetischen Sensor (323a, 953) erfassten elektromagnetischen Feldes und, nachdem festgestellt wurde, dass die geänderte Dichte des elektromagnetischen Feldes einen Schwellenwert erreicht, Erhöhen oder Verringern eines ersten Stroms, der dem elektromagnetischen Element (323b, 423b, 951) zugeführt wird; und
Bestimmen des Zustands, sich in der ersten Position zu befinden, oder Berechnen des Entfaltungswinkels des zweiten Gehäuses (220) in Bezug auf das erste Gehäuse (210) auf Grundlage des von dem elektromagnetischen Sensor (323a, 953) erfassten elektromagnetischen Feldes nach dem Zuführen des zu erhöhenden oder zu verringernden ersten Stroms zu dem elektromagnetischen Element (323b, 423b, 951).

11. Elektronische Vorrichtung (101, 200, 300, 901) nach einem der Ansprüche 5 bis 7 und 10, wobei der Prozessor (120, 920) zu Folgendem ausgelegt ist:
Zuführen eines zweiten Stroms, der höher als der erste Strom ist, zu dem elektromagnetischen Element (323b, 423b, 951) nachdem festgestellt wurde, dass die Dichte des elektromagnetischen Feldes einen ersten Schwellenwert (th) erreicht, während der erste Strom dem elektromagnetischen Element (323b, 423b, 951) zugeführt wird, oder
Zuführen des ersten Stroms, der niedriger als der zweite Strom ist, zu dem elektromagnetischen Element (323b, 423b, 951) nachdem festgestellt wurde, dass die Dichte des elektromagnetischen Feldes einen zweiten Schwellenwert erreicht, der größer als der erste Schwellenwert (th) ist, während der zweite Strom dem elektromagnetischen Element (323b, 423b, 951) zugeführt wird.

12. Elektronische Vorrichtung (101, 200, 300, 901) nach Anspruch 11, wobei der Prozessor (120, 920) zu Folgendem ausgelegt ist:
Bestimmen des Zustands, sich in der ersten Position zu befinden, oder Berechnen des Entfaltungswinkels des zweiten Gehäuses (220) in Bezug auf das erste Gehäuse (210) auf Grundlage des von dem elektromagnetischen Sensor (323a, 953) erfassten elektromagnetischen Feldes nachdem festgestellt wurde, dass die Dichte des elektromagnetischen Feldes den ersten Schwellenwert (th) nicht erreicht, während der erste Strom dem elektromagnetischen Element (323b, 423b, 951) zugeführt wird.

13. Elektronische Vorrichtung (101, 200, 300, 901) nach einem der Ansprüche 2 bis 12, wobei der Prozessor (120, 920) zu Folgendem ausgelegt ist:
Bestimmen der ersten Position, die dem von dem elektromagnetischen Sensor (323a, 953) erfassten elektromagnetischen Feld entspricht, in einer in einem Speicher (130, 930) der elektronischen Vorrichtung (101, 200, 300, 901) gespeicherten Faltwinkeltabelle oder Berechnen des Entfaltungswinkels des zweiten Gehäuses (220) in Bezug auf das erste Gehäuse (210).

14. Elektronische Vorrichtung (101, 200, 300, 901) nach einem der Ansprüche 2 bis 13, wobei der Prozessor (120, 920) zu Folgendem ausgelegt ist:
wenn die erste Position oder der Entfaltungswinkel des zweiten Gehäuses (220) in Bezug auf das erste Gehäuse (210) ersten Achseninformationen unter einer Vielzahl von Achseninformationen zugeordnet ist, die in einer in einem Speicher (130, 930) der elektronischen Vorrichtung (101, 200, 300, 901) gespeicherten Faltwinkeltabelle gespeichert sind, Berechnen der ersten Position oder des Entfaltungswinkels des zweiten Gehäuses (220) in Bezug auf das erste Gehäuse (210), die bzw. der den ersten Achseninformationen zugeordnet ist.

15. Elektronische Vorrichtung (101, 200, 300, 901) nach einem der Ansprüche 2 bis 14, wobei der Prozessor (120, 920) zu Folgendem ausgelegt ist:
wenn die erste Position oder der Entfaltungswinkel des zweiten Gehäuses (220) in Bezug auf das erste Gehäuse (210) nicht ersten Achseninformationen unter einer Vielzahl von Achseninformationen zugeordnet ist, die in einer in einem Speicher (130, 930) der elektronischen Vorrichtung (101, 200, 300, 901) gespeicherten Faltwinkeltabelle gespeichert sind, Feststellen, dass die erste Position oder der Entfaltungswinkel des zweiten Gehäuses (220) in Bezug auf das erste Gehäuse (210) zweiten Achseninformationen zugeordnet ist, die sich von den ersten Achseninformationen unter der Vielzahl von Achseninformationen unterscheiden, und Berechnen der ersten Position oder des Entfaltungswinkels des zweiten Gehäuses (220) in Bezug auf das erste Gehäuse (210), die bzw. der den zweiten Achseninformationen zugeordnet ist.

## Revendications

1. Dispositif électronique (101, 200, 300, 901) comprenant :
un boîtier (201) comportant un premier boîtier (210) et un deuxième boîtier (220) configuré de manière à faire une rotation par rapport au premier boîtier (210) autour d'un axe de pliage (A) ;
un organe électromagnétique (323b, 423b, 951) disposé soit dans le premier boîtier (210) soit dans le deuxième boîtier (220) et configuré de manière à générer un champ électromagnétique ;
un capteur électromagnétique (323a, 953) disposé dans l'autre du premier boîtier (210) et du deuxième boîtier (220) et configuré de manière à détecter le champ électromagnétique ; et
une structure charnière disposée à l'intérieur du boîtier (201) pour fournir l'axe de pliage (A) et configurée de manière à coupler en rotation le premier boîtier (210) et le deuxième boîtier (220),
dans lequel la structure charnière comprend :
une première plaque charnière (202a) disposée dans le premier boîtier (210) et comportant une première partie (321a) configurée de manière à guider le champ électromagnétique en ayant une perméabilité électromagnétique différente des autres parties de la première plaque charnière (202a) ; et
une deuxième plaque charnière (202b) disposée dans le deuxième boîtier (220), couplée en rotation à la première plaque charnière (202a), et comportant une deuxième partie (321b) configurée de manière à guider le champ électromagnétique en ayant une perméabilité électromagnétique différente des autres parties de la deuxième plaque charnière (202b), et
dans lequel la première partie (321a) est disposée entre l'axe de pliage (A) et le capteur électromagnétique (323a, 953), et la deuxième partie (321b) est disposée entre l'axe de pliage (A) et l'organe électromagnétique (323b, 423b, 951).

2. Dispositif électronique (101, 200, 300, 901) selon la revendication 1, dans lequel le deuxième boîtier (220) est configuré de manière à faire une rotation entre une première position où le deuxième boîtier (220) est en regard du premier boîtier (210) et une deuxième position où le deuxième boîtier (220) est déplié de la première position d'un angle désigné, et
dans lequel au moins un des points suivants s'applique :
dans la deuxième position, la première partie (321a) et la deuxième partie (321b) sont disposées entre le capteur électromagnétique (323a, 953) et l'organe électromagnétique (323b, 423b, 951), dans la deuxième position, le capteur électromagnétique (323a, 953), la première partie (321a), la deuxième partie (321b) et l'organe électromagnétique (323b, 423b, 951) sont disposés séquentiellement selon une direction traversant l'axe de pliage (A), et
le dispositif électronique (101, 200, 300, 901) comprend en outre un processeur (120, 920) configuré de manière à déterminer un état d'être dans la première position ou calculer un angle de dépliage du deuxième boîtier (220) par rapport au premier boîtier (210), à partir du champ électromagnétique détecté par le capteur électromagnétique (323a, 953).

3. Dispositif électronique (101, 200, 300, 901) selon la revendication 1 ou la revendication 2, comprenant en outre :
une première carte de circuit (262) reçue dans le premier boîtier (210) ; et
une première carte de câblage (362a) configurée de manière à s'étendre depuis la première carte de circuit (262),
dans lequel le capteur électromagnétique (323a, 953) est disposé sur la première carte de câblage (362a) entre la première partie (321a) et la première carte de circuit (262).

4. Dispositif électronique (101, 200, 300, 901) selon l'une des revendications 1 à 3, dans lequel l'organe électromagnétique (323b, 423b, 951) comporte un aimant permanent.

5. Dispositif électronique (101, 200, 300, 901) selon l'une des revendications 1 à 3, dans lequel l'organe électromagnétique (323b, 423b, 951) comporte une bobine configurée de manière à recevoir un courant pour générer le champ électromagnétique.

6. Dispositif électronique (101, 200, 300, 901) selon la revendication 5, comprenant en outre :
une deuxième carte de circuit (264) reçue dans le deuxième boîtier (220) ; et
une deuxième carte de câblage (464a) s'étendant depuis la deuxième carte de circuit (264),
dans lequel la bobine est disposée entre la deuxième partie (321b) et la deuxième carte de circuit (264) pour être reliée électriquement à la deuxième carte de circuit (264) par l'intermédiaire de la deuxième carte de câblage (464a).

7. Dispositif électronique (101, 200, 300, 901) selon la revendication 5 ou 6, dans lequel la bobine comporte une bobine de solénoïde.

8. Dispositif électronique (101, 200, 300, 901) selon l'une des revendications 1 à 7, comprenant en outre :
un affichage comportant une première zone d'affichage (241) disposée sur le premier boîtier (210), une deuxième zone d'affichage (242) disposée sur le deuxième boîtier (220), et une zone de pliage (203, 243) positionnée entre la première zone d'affichage (241) et la deuxième zone d'affichage (242).

9. Dispositif électronique (101, 200, 300, 901) selon l'une des revendications 1 à 8, dans lequel la première partie (321a) ou la deuxième partie (321b) comporte un matériau de résine synthétique.

10. Dispositif électronique (101, 200, 300, 901) selon l'une des revendications 5 à 7, dans lequel le processeur (120, 920) est configuré de manière à :
identifier une modification de densité du champ électromagnétique détecté par le capteur électromagnétique (323a, 953) et, dès l'identification que la densité modifiée du champ électromagnétique atteint un seuil, augmenter ou diminuer un premier courant délivré à l'organe électromagnétique (323b, 423b, 951) ; et
déterminer l'état d'être dans la première position ou calculer l'angle de dépliage du deuxième boîtier (220) par rapport au premier boîtier (210), à partir du champ électromagnétique détecté par le capteur électromagnétique (323a, 953) après avoir délivré le premier courant à l'organe électromagnétique (323b, 423b, 951) pour augmenter ou diminuer.

11. Dispositif électronique (101, 200, 300, 901) selon l'une des revendications 5 à 7 et 10, dans lequel le processeur (120, 920) est configuré de manière à
délivrer un deuxième courant supérieur au premier courant à l'organe électromagnétique (323b, 423b, 951) après avoir identifié que la densité du champ électromagnétique atteint un premier seuil (th) tandis que le premier courant est délivré à l'organe électromagnétique (323b, 423b, 951), ou
délivrer le premier courant inférieur au deuxième courant à l'organe électromagnétique (323b, 423b, 951) après avoir identifié que la densité du champ électromagnétique atteint un deuxième seuil supérieur au premier seuil (th) tandis que le deuxième courant est délivré à l'organe électromagnétique (323b, 423b, 951).

12. Dispositif électronique (101, 200, 300, 901) selon la revendication 11, dans lequel le processeur (120, 920) est configuré de manière à
déterminer l'état d'être dans la première position ou calculer l'angle de dépliage du deuxième boîtier (220) par rapport au premier boîtier (210), à partir du champ électromagnétique détecté par le capteur électromagnétique (323a, 953) dès l'identification que la densité du champ électromagnétique n'atteint pas le premier seuil (th) tandis que le premier courant est délivré à l'organe électromagnétique (323b, 423b, 951).

13. Dispositif électronique (101, 200, 300, 901) selon l'une des revendications 2 à 12, dans lequel le processeur (120, 920) est configuré de manière à
déterminer la première position correspondant au champ électromagnétique détecté par le capteur électromagnétique (323a, 953) dans une table d'angles de pliage stockée dans une mémoire (130, 930) du dispositif électronique (101, 200, 300, 901) ou calculer l'angle de dépliage du deuxième boîtier (220) par rapport au premier boîtier (210).

14. Dispositif électronique (101, 200, 300, 901) selon l'une des revendications 2 à 13, dans lequel le processeur (120, 920) est configuré de manière à,
lorsque la première position ou l'angle de dépliage du deuxième boîtier (220) par rapport au premier boîtier (210) est mis en correspondance avec une première information d'axe parmi une pluralité d'informations d'axe stockées dans une table d'angles de pliage stockée dans une mémoire (130, 930) du dispositif électronique (101, 200, 300, 901), calculer la première position ou l'angle de dépliage du deuxième boîtier (220) par rapport au premier boîtier (210), mis en correspondance avec la première information d'axe.

15. Dispositif électronique (101, 200, 300, 901) selon l'une des revendications 2 à 14, dans lequel le processeur (120, 920) est configuré de manière à,
lorsque la première position ou l'angle de dépliage du deuxième boîtier (220) par rapport au premier boîtier (210) n'est pas mis en correspondance avec une première information d'axe parmi une pluralité d'informations d'axe stockées dans une table d'angles de pliage stockée dans une mémoire (130, 930) du dispositif électronique (101, 200, 300, 901), identifier que la première position ou l'angle de dépliage du deuxième boîtier (220) par rapport au premier boîtier (210) est mis en correspondance avec une deuxième information d'axe différente de la première information d'axe parmi la pluralité d'informations d'axe et calculer la première position ou l'angle de dépliage du deuxième boîtier (220) par rapport au premier boîtier (210), mis en correspondance avec la deuxième information d'axe.
